(19) Europäisches Patentamt
European Patent Office
Office européen des brevets

(11) EP 1 045 532 A1

(12) EUROPEAN PATENT APPLICATION
published in accordance with Art. 158(3) EPC

(43) Date of publication:
18.10.2000 Bulletin 2000/42

(51) Int. Cl.⁷: H04B 7/26, H04Q 7/34,
G01C 21/00

(21) Application number: 98961390.6

(22) Date of filing: 17.12.1998

(86) International application number:
PCT/JP98/05714

(87) International publication number:
WO 99/31824 (24.06.1999 Gazette 1999/25)

(84) Designated Contracting States:
DE ES FI FR GB IT NL

(30) Priority: 17.12.1997 JP 34822797

(71) Applicant: AIWA CO., LTD.
Taito-ku, Tokyo 110-0008 (JP)

(72) Inventors:
• ADACHI, Naofumi,
Aiwa Co., Ltd.
Tokyo 110-0008 (JP)

• OOTAKE, Akira,
Aiwa Co., Ltd.
Tokyo 110-0008 (JP)

(74) Representative:
Müller, Frithjof E., Dipl.-Ing.
Patentanwälte
MÜLLER & HOFFMANN,
Innere Wiener Strasse 17
81667 München (DE)

(54) COMMUNICATION TERMINAL

(57) This invention relates to a communication terminal device such as a personal handyphone system or a portable telephone. A combination of CS-ID group and corresponding position information (character series) may be stored in a memory means in advance. In the standby mode, CS-ID group comprising CS-ID concerning control channels whose receive signal strength indicate (RSSI) may fall within the high-order predetermined number may be obtained from CS-ID which may be sequentially received by search operations executed at every constant time and which may be stored in a RAM. If an incoming call is an incoming call concerning a designated caller telephone number and a code which agrees with an information notice code is located at an incoming sub-address (ST29), then the number of coincident CS-ID in each of a plurality of combinations may be checked by comparing CS-ID groups stored in the RAM and CS-ID groups of each of a plurality of combinations stored in the memory means, and position information comprising a combination having the maximum number of coincident base station identification information may be obtained (ST30). Such position information (indicating the position of terminal device) may be transmitted to the caller side (monitor side) (ST32), whereby the caller side can easily recognize the position of the terminal body.

FIG. 12

**Description**

**TECHNICAL FIELD**

This invention relates to a communication terminal device for use with a personal handyphone system, a portable telephone or the like. More specifically, this invention relates to a communication terminal device in which combinations of base station identification information groups and corresponding position information are memorized in a memory means and position information comprising a combination having the maximum number of coincident base station identification information is obtained by comparing base station identification information groups obtained by sequentially receiving control channels of available public base stations with base station information groups of each of a plurality of combinations stored in the memory means, thereby making it possible to easily recognize the position of a device body.

**BACKGROUND ART**

Recently, a communication terminal device, e.g. a personal handyphone system (PHS: Personal Handyphone System) has become more compact and light so that the communication terminal device may become easier to carry. Generally, when one wishes to know the position of a user of a personal handyphone system, one can confirm the position of the user by calling the user's personal handyphone system and talking with the user.

However, if a user of the personal handyphone system had been a user such as a little child or a child who does not know the neighborhood, one would not recognize the position of the user even by talking with the user.

Therefore, it is an object of this invention to provide a communication terminal device for enabling a user to easily recognize the position of a user, i.e. the position of a device body without talking with a user through the communication terminal device, for example.

**DISCLOSURE OF INVENTION**

A communication terminal device according to this invention may comprise a memory means for storing therein a plurality of combinations of base station identification groups and corresponding position information, an information acquisition means for acquiring a base station identification information group comprising base station identification information concerning control channels whose receive signal strength indicate may fall within the high-order predetermined number from base station identification information obtained by sequentially receiving control channels of available public base stations and an information processing means for obtaining position information comprising a combination having the maximum number of coincident base station identification information by comparing the base station identification information groups acquired at this information acquisition means and base station identification information groups of each of a plurality of combination stored in the memory means.

The memory means may have stored therein a plurality of combinations of the base station identification information group and corresponding position information. This memory means may be comprised of an IC card or the like, for example, and may be detachably attached to the device body. Also, this memory means may receive and store therein combinations of base station identification information groups and corresponding position information from other communication terminal device, a service center or the like, for example.

Also, a communication terminal device may further comprise a mode set means for setting a position input operation mode to store a combination of the base station identification information group and corresponding position information in the memory means and a position information input means for inputting position information and wherein the base station identification information group acquired by the information acquisition means and the position information inputted by the position information input means may be paired and stored in the memory means in the position input operation mode. At that very moment, if the base station identification information group acquired by the information acquisition means agrees with the base station identification information group of the predetermined combination stored in the memory means, then it becomes possible to avoid the same information from being overlapped in the memory means by displaying a message of such coincident base station identification information group on a display means.

The information acquisition means may output a base station identification information group comprising the base station identification information concerning control channels whose receive signal strength indicate may fall within the high-order predetermined number from base station identification information obtained by a search operation, i.e. by sequentially receiving control channels of available public base stations. The operation for obtaining this base station identification information group may be executed at every predetermined time, for example, or may be executed when received data is deteriorated or may further be executed when a call is coming in from someone having a designated telephone number. When received data is deteriorated, the search operation should be executed in order to obtain a control channel in which a synchronization should be established. This search operation may be served also as a search operation for obtaining the above-mentioned base station identification information group.

The information processing means may obtain position information comprising the above-mentioned combination having the maximum number of coincident base station identification information by comparing by comparing the base station identification information groups acquired by this information acquisition means with the base station identification information groups of each of a plurality of combinations stored in the memory means. This position information may indicate the position of the device body. When an inform means such as a character or image display section or an audio output section informs a user of the position indicated by this position information, it may become possible for the user to easily recognize the position of the user. Moreover, when this position information is transmitted to the party being called, it may become possible for the party being called to easily recognize the position of the user. When this position information is character series data, this position information may be transmitted in the form of a DTMF signal, for example.

In this case, data indicative of accuracy of the position information may be added to position information in response to the number of coincident base station identification information and resultant position information may be transmitted to the party being called, whereby the party being called may become able to recognize the accuracy of the position information. When the number of coincident base station identification information is small, for example, data indicative of accuracy may be character information such as "around ..." or "near ...". Also, when the respective base station identification information groups of each of a plurality of combinations stored in the memory means and base station identification information groups acquired by the information acquisition means are divided into a plurality of groups based on the above-mentioned receive signal strength indicate and the number of coincident base station identification information is obtained by comparing the base station identification information group acquired by the information acquisition means with the base station identification information group of each of a plurality of combinations stored in the memory means at every group, it may become possible to obtain position information with higher accuracy.

Incidentally, position information may be transmitted at the following timing in response to the position information request from the caller side (monitor side). For example, when an incoming call arrives from a caller, if a telephone number of the caller side concerning the incoming call is a designated telephone number, then the position information is transmitted to the party being called after the personal handyphone system automatically answered to the incoming call. Also, if a designated information notice code is transmitted from the party being called when a call is coming in, then the position information is transmitted to the party being called after the personal handyphone system automatically answered to the incoming call. The information notice code may be transmitted under the condition that it may be located at an incoming sub-address, for example. Further, in the telephone communication state, for example, when the position information request is transmitted from the party being called in the form of the DTMF signal, the position information may be transmitted to the party being called.

The communication terminal device may include a mode set means for setting a position investigation mode in which position information is transmitted to the party being called. The position information transmission means may transmit position information to the party being called only when the mode set means sets the position investigation mode. Thus, it may become possible to avoid position information from being transmitted to the party being called by the setting of the terminal device itself. Also, the mode set means may become able to set the position investigation mode only when a combination of base station identification information group and corresponding position information is stored in the memory means. Thus, it may be possible to avoid the position investigation mode from being set uselessly.

Also, the information acquisition means may execute an operation for obtaining the base station identification information group when an incoming call arrives from the party being called having a designated telephone number. Thereafter, the position information transmission means may make an outgoing call to the party being called having the designated telephone number and may transmit the position information obtained by the information processing means to the party being called. In this case, since the base station identification information group should be obtained by the search operation, it is necessary for the user to call the other party in order to transmit the position information to the party being called.

Further, the kind of position information data can be selected. For example, position information data may be selected from character series data, audio data, image data and the like. In this case, the notice method may be designated by the party being called (monitor side), and the kind of transmitted position information data may be selected based on such designation. Thus, it may become possible for the party being called to obtain position information by the kind of desired data. For example, if the party being called is a general telephone set, then audio data and character series data may be designated. Moreover, if the party being called is a facsimile, then image data may be designated. Further, if the party being called is a personal computer (modem), then character series data, audio data and image data may be designated together.

Furthermore, position information automatically acquired at every predetermined time or position information acquired when the position information request is issued from the party being called (monitor side) may be paired with a time obtained at that very moment and such pair may be held in a nonvolatile memory or the like as historical information. When the position information request is issued, the historical information also may be transmitted to the party being called (monitor side). Thus, it may become possible for the party being called to easily know the history in which the monitored side had moved. Incidentally, this historical information may be held by the party being called which receives information position from the monitored side.

**BRIEF DESCRIPTION OF DRAWINGS**

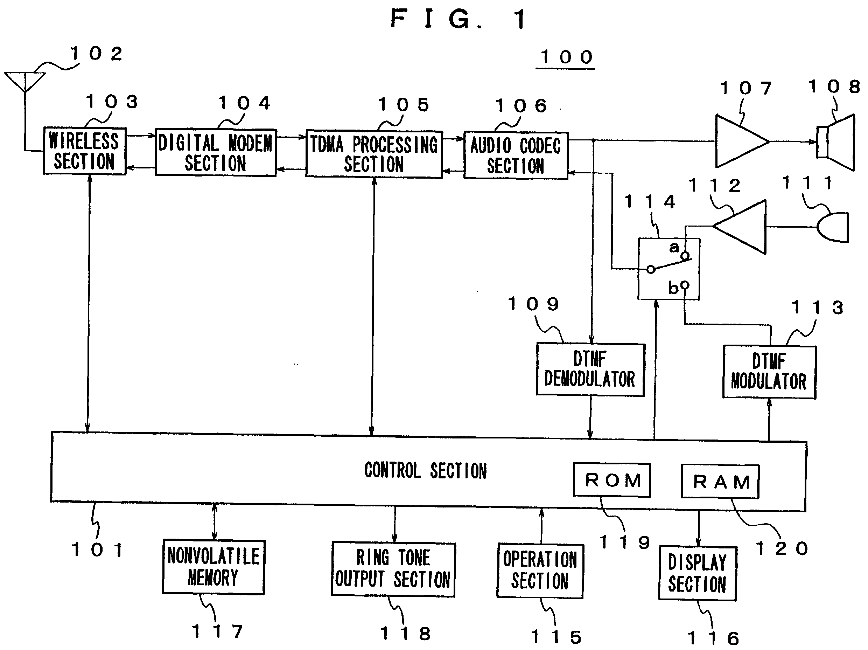

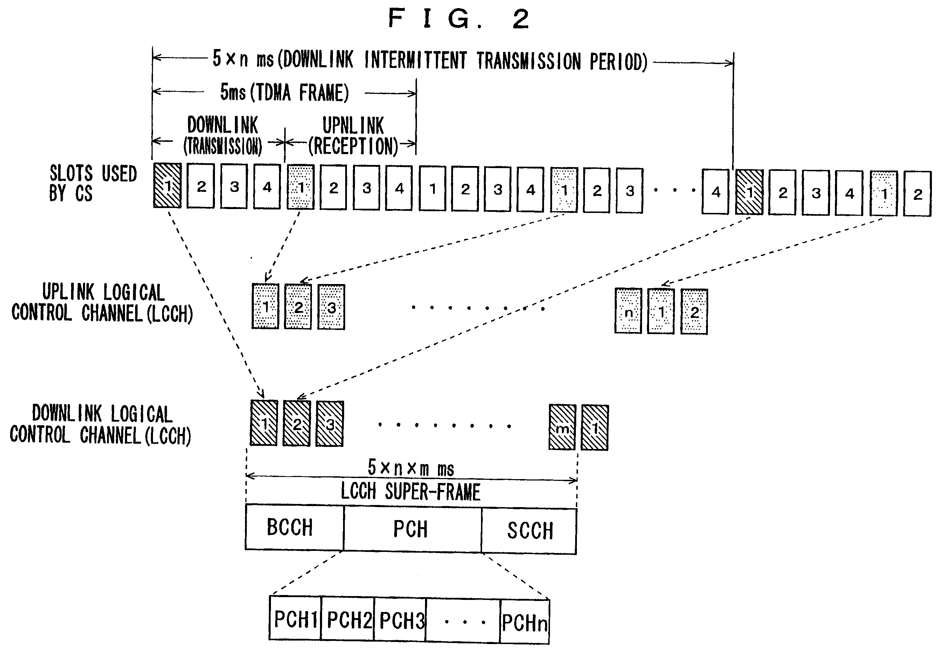

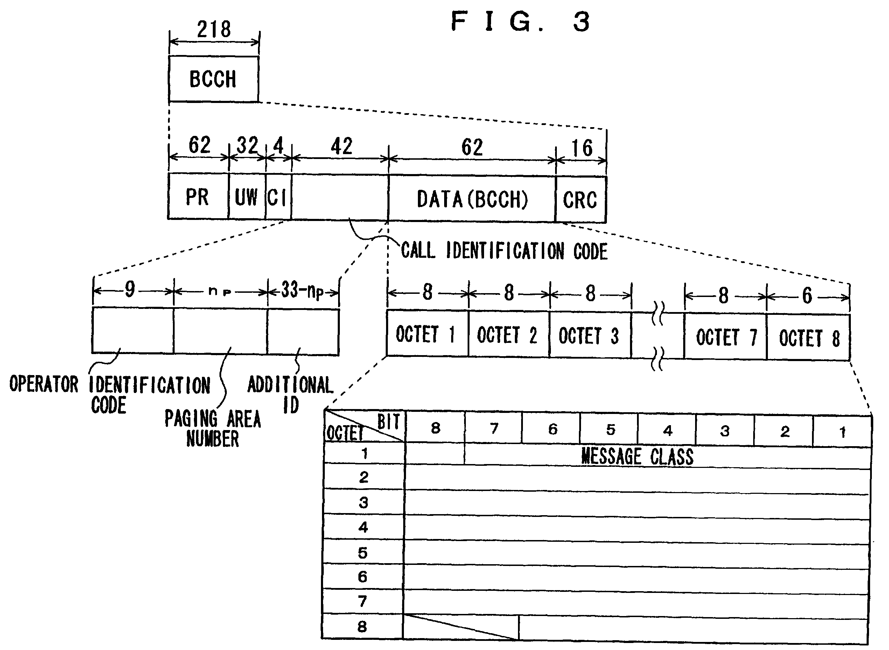

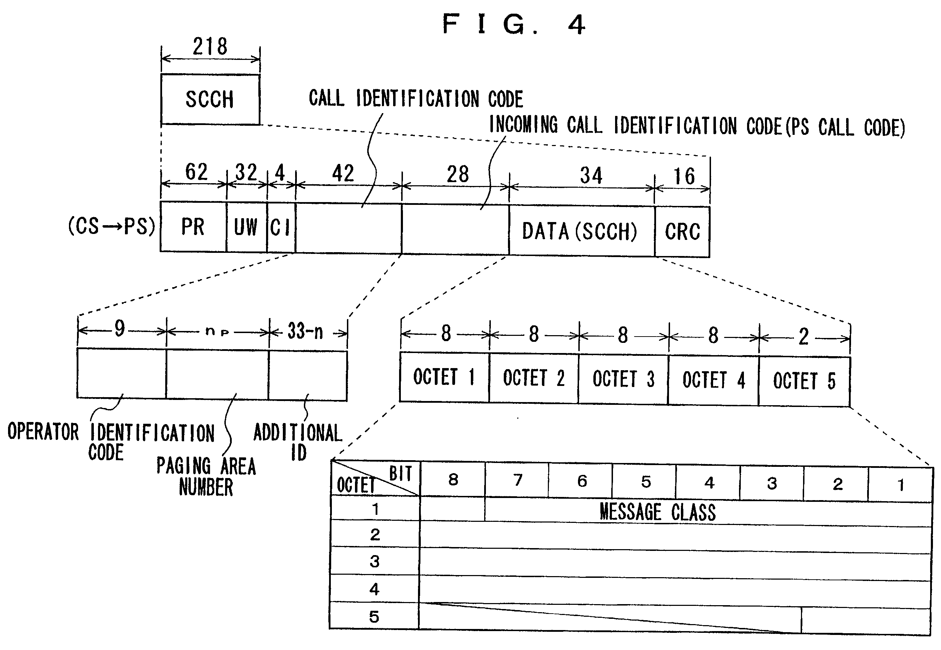

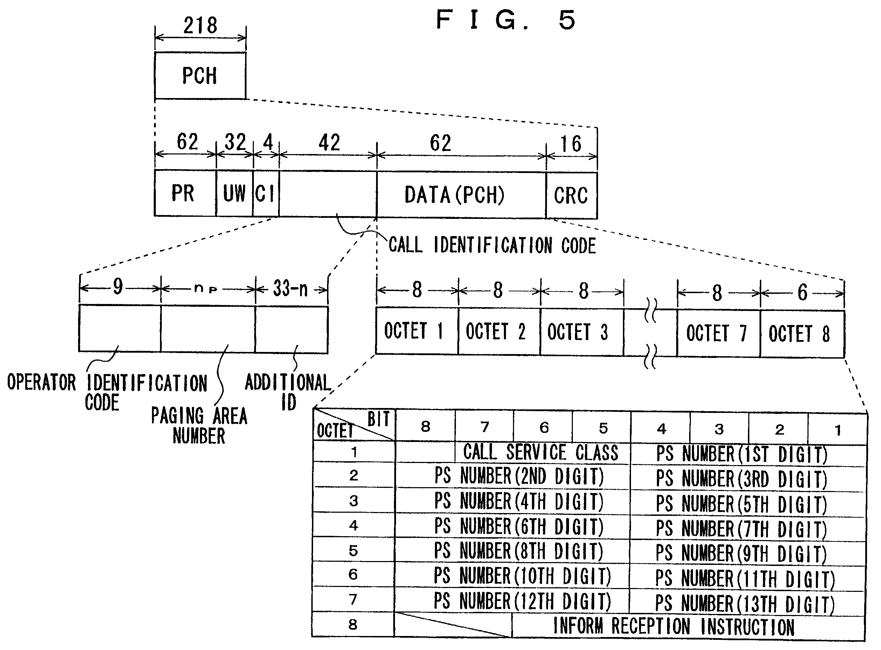

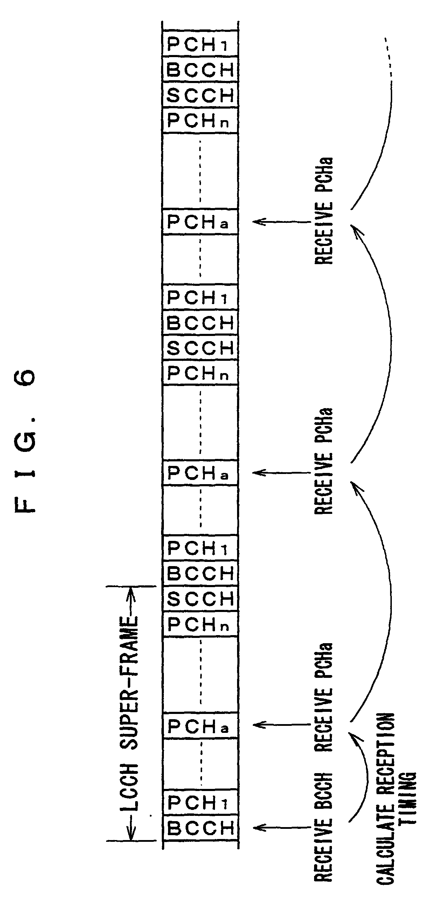

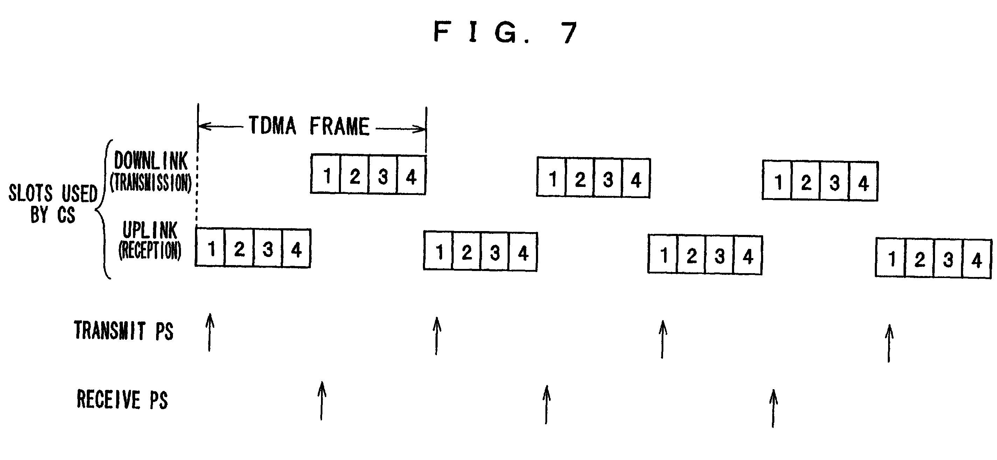

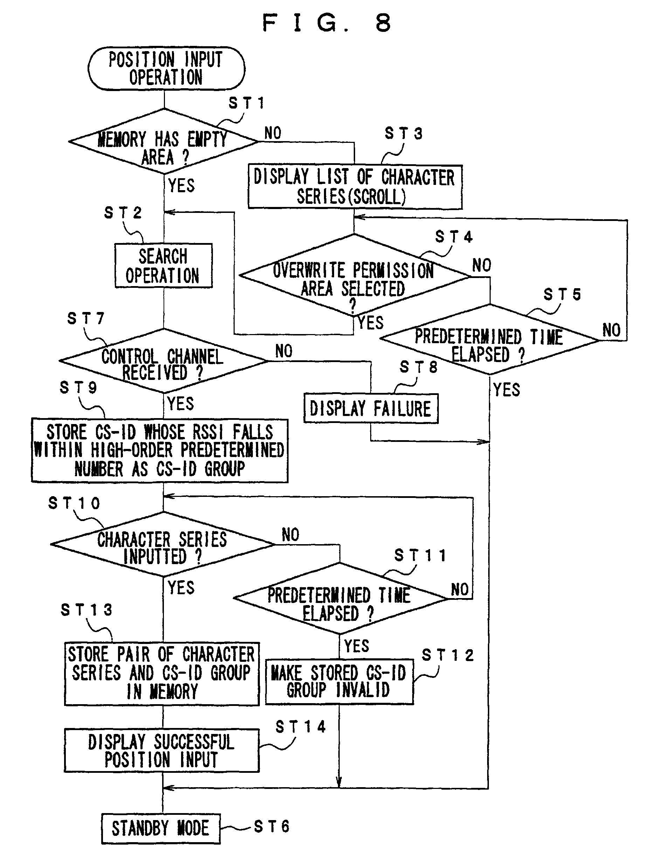

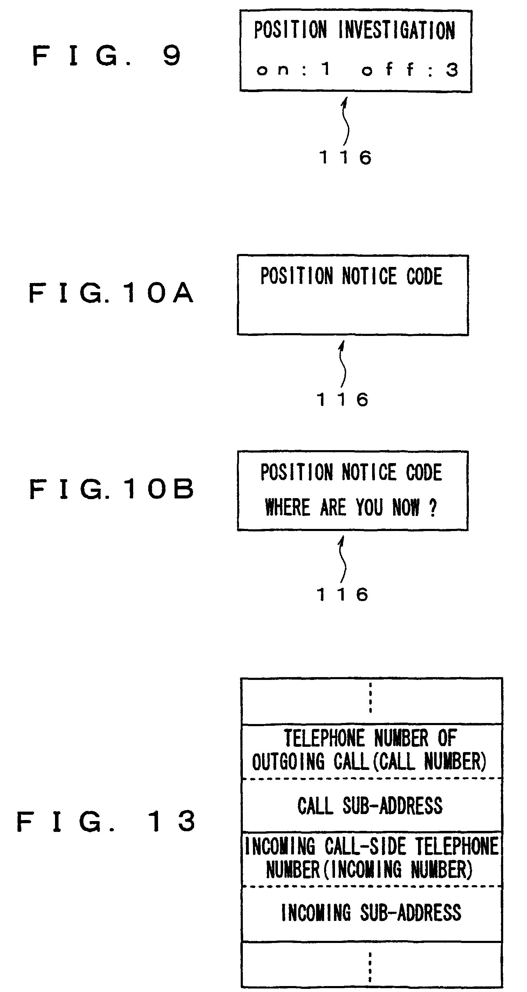

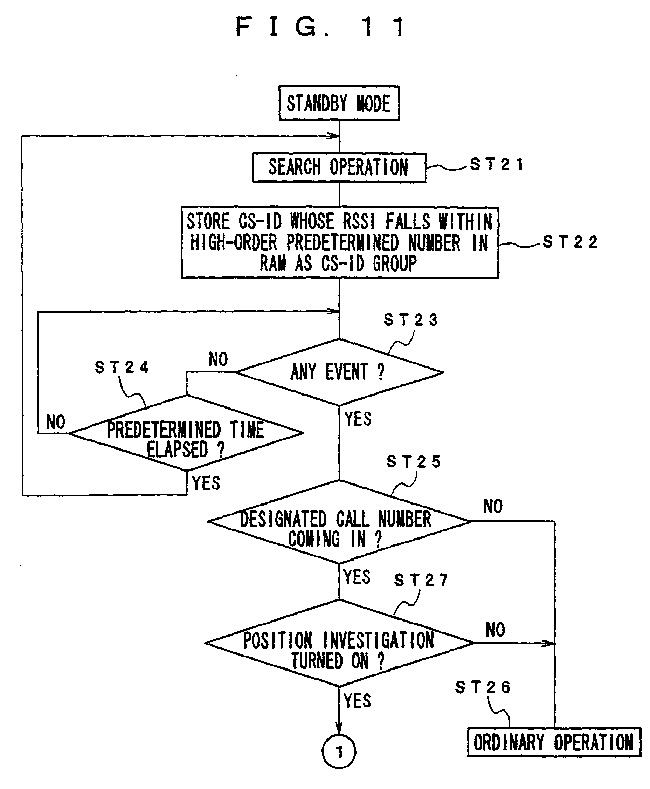

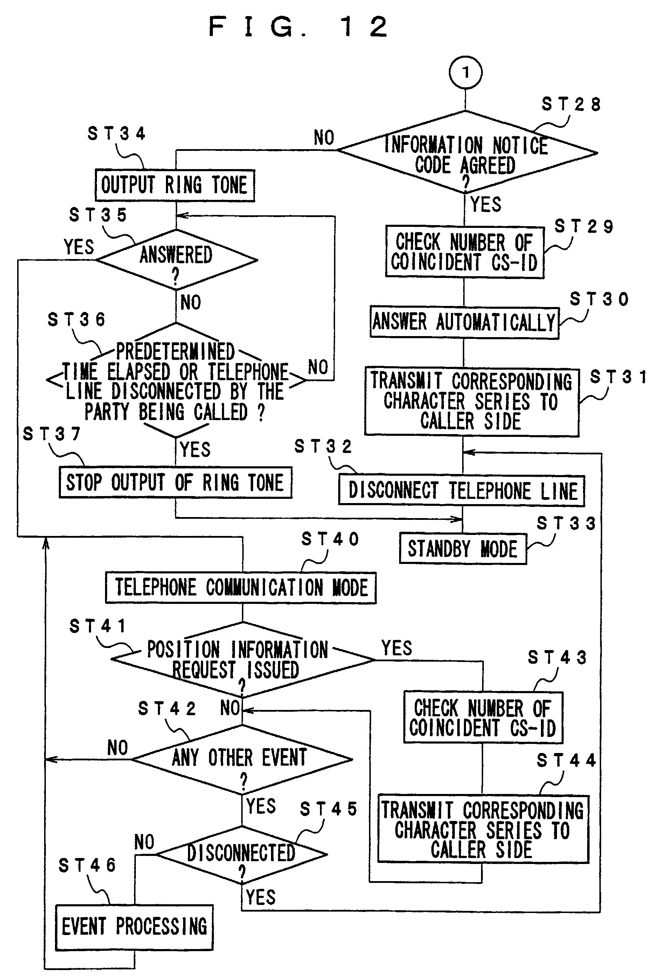

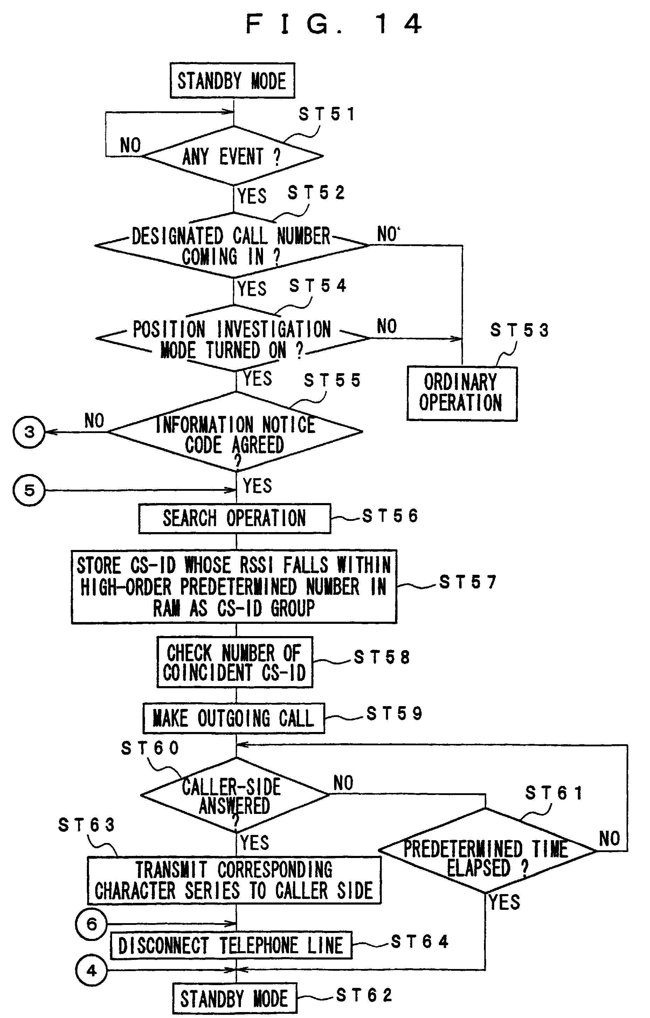

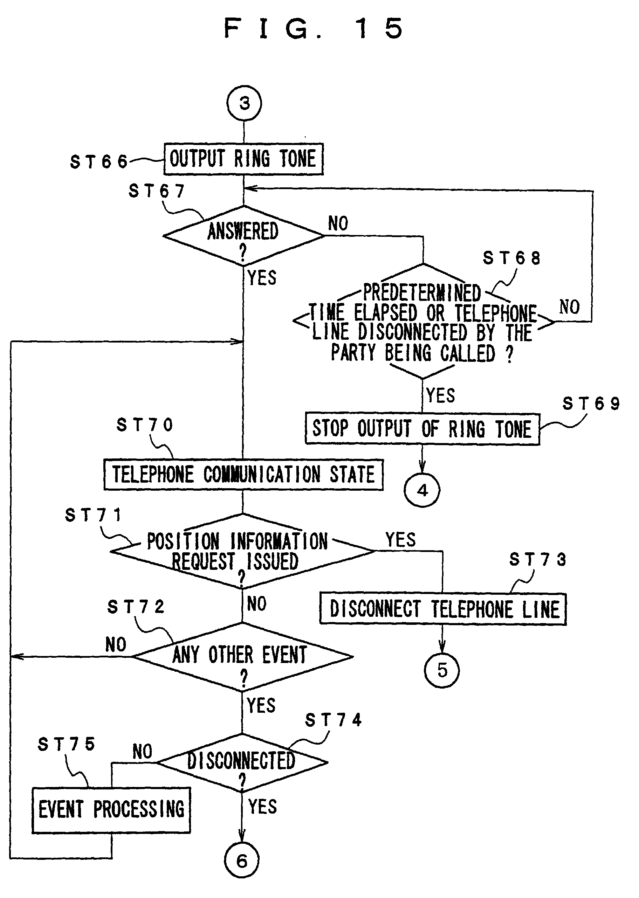

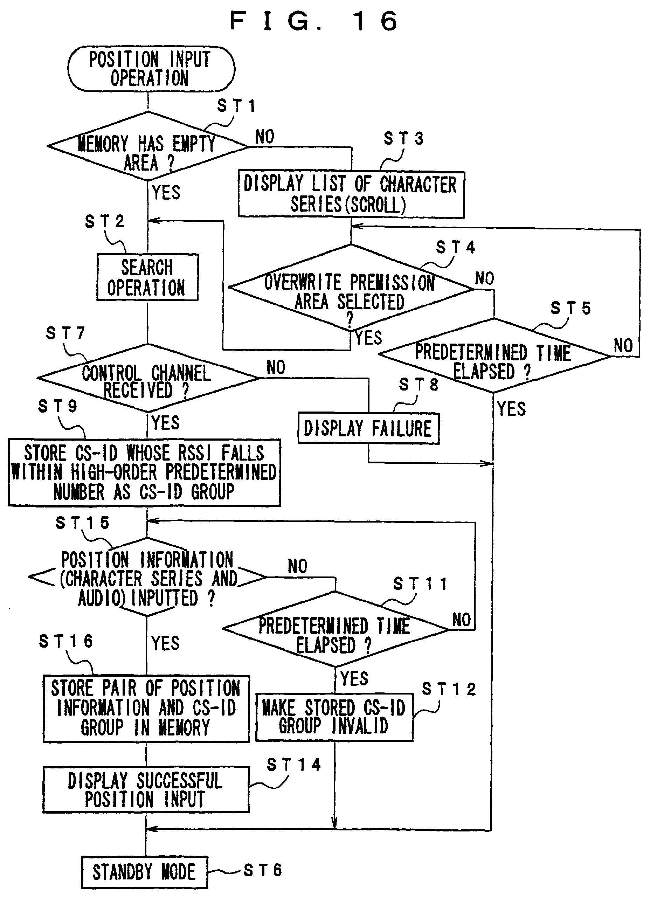

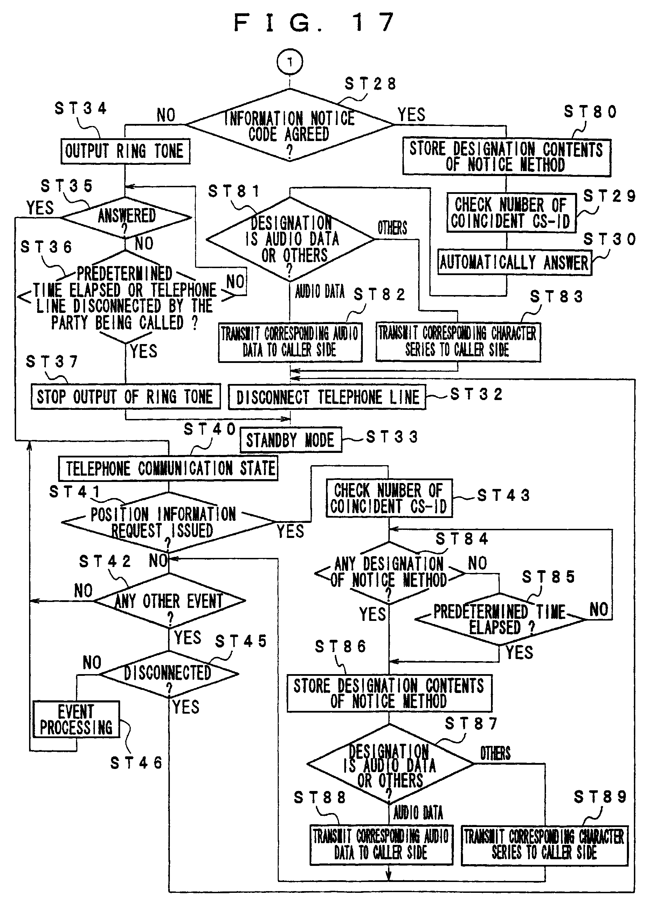

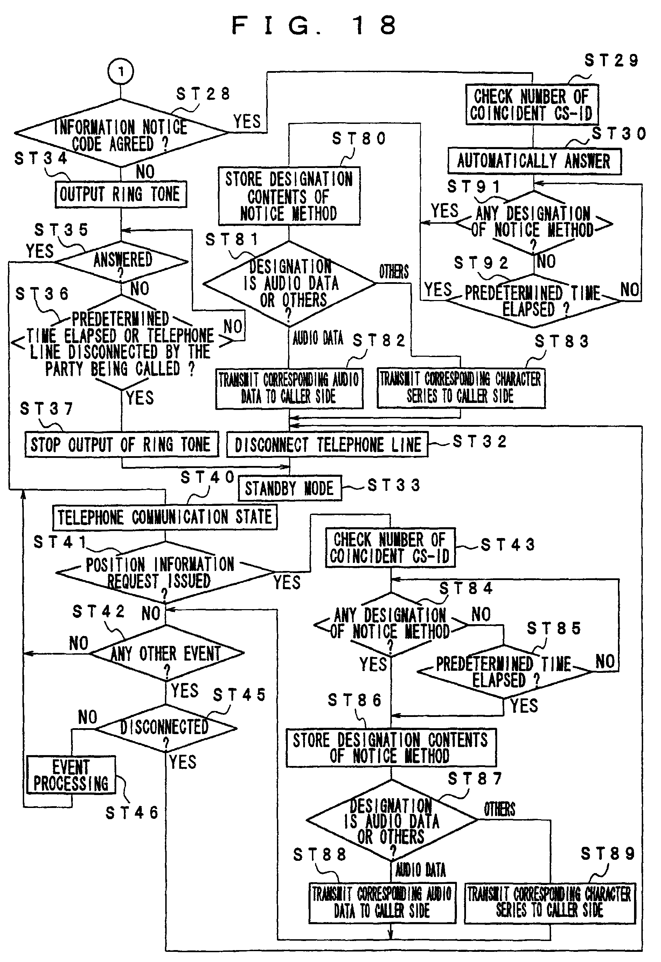

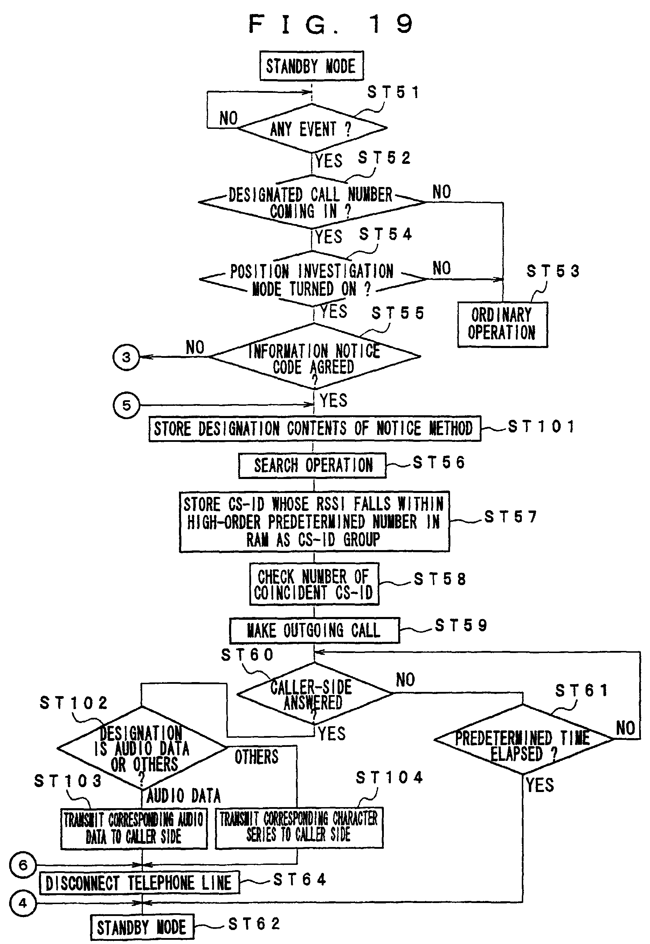

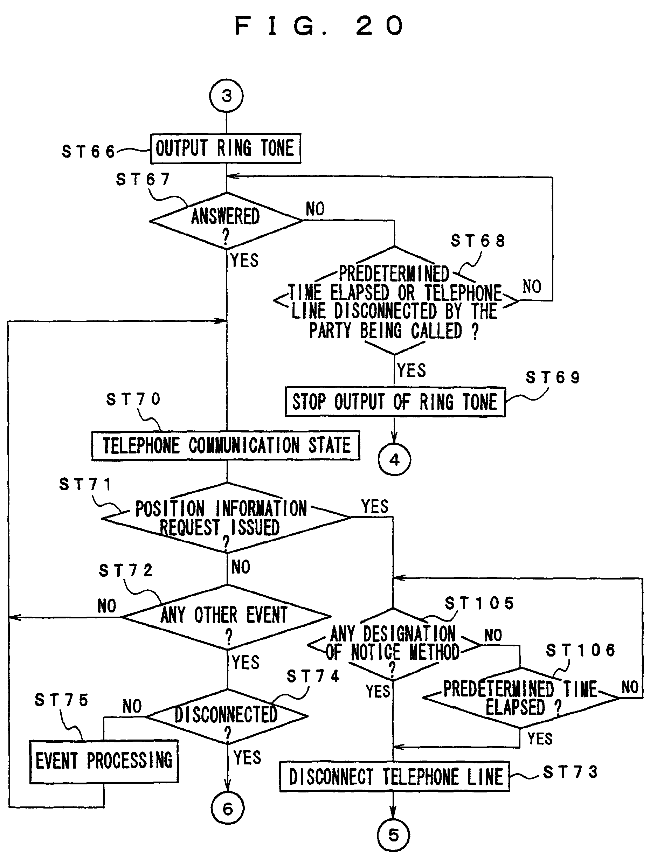

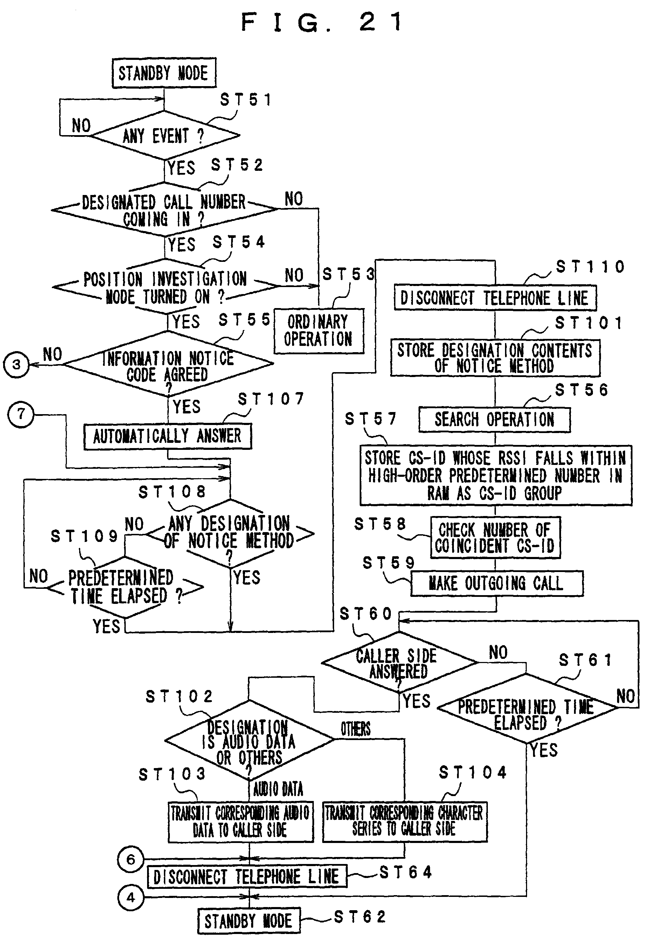

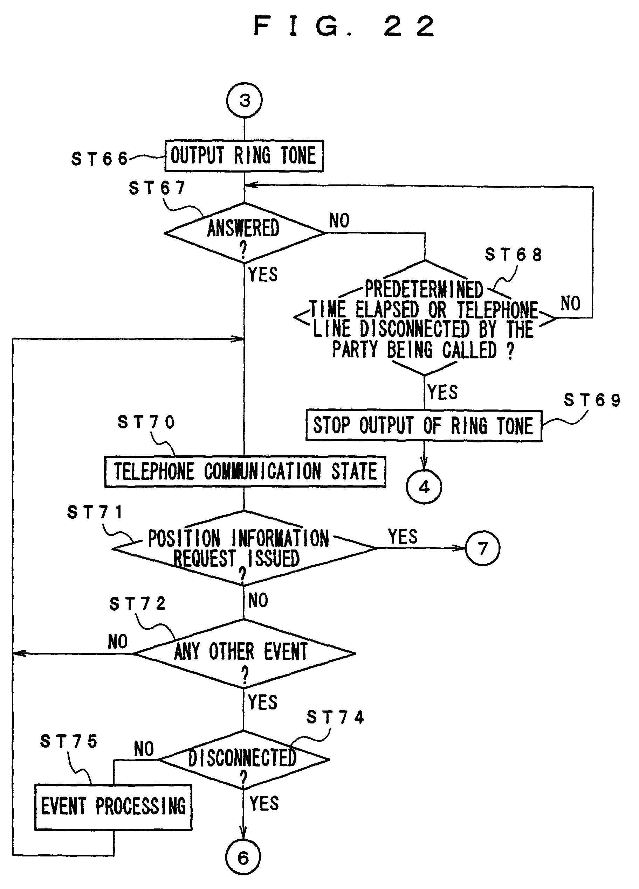

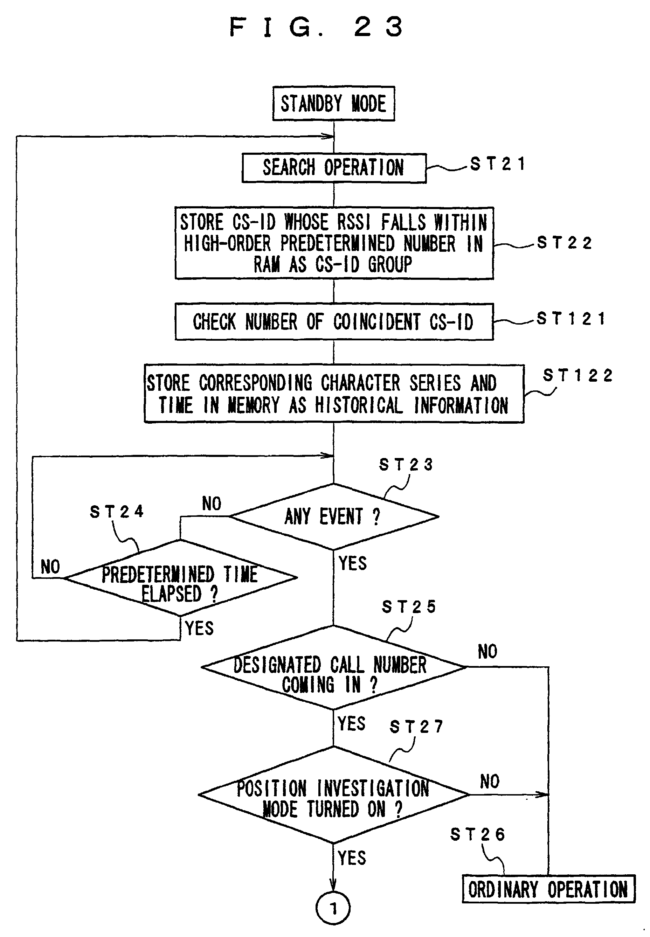

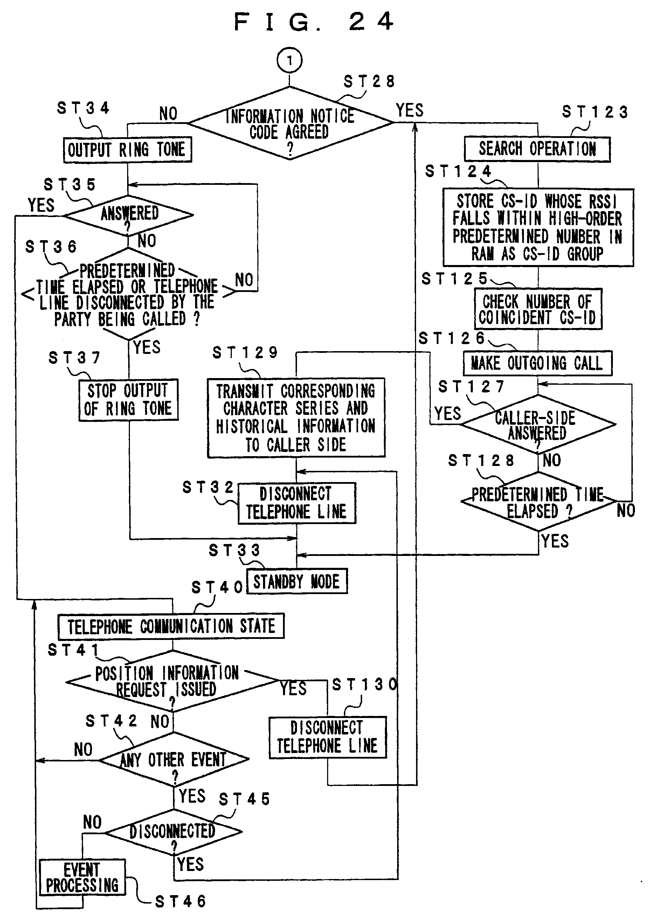

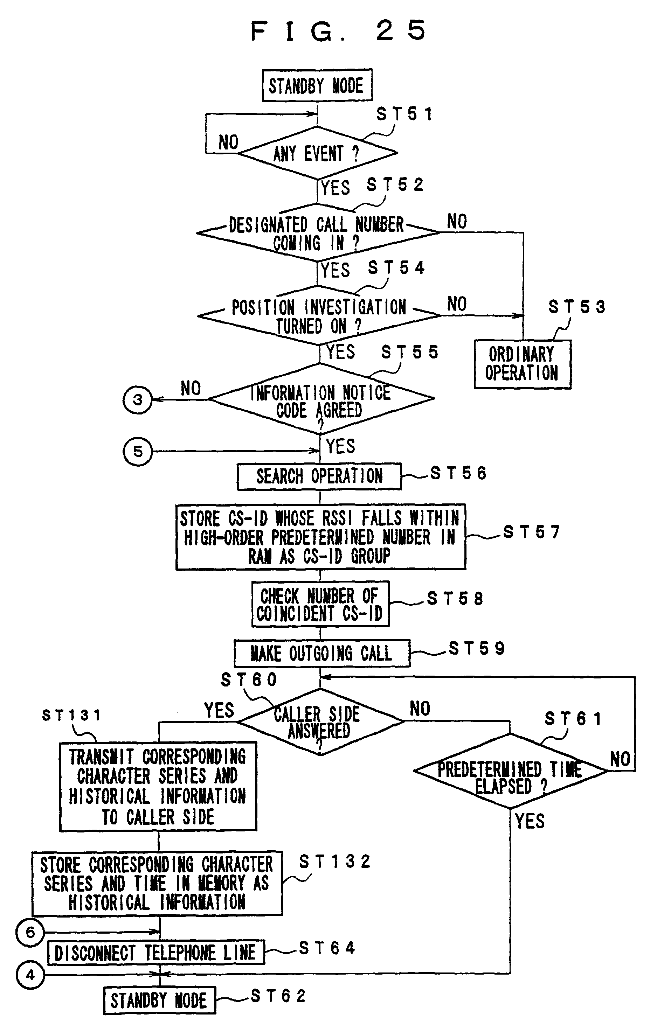

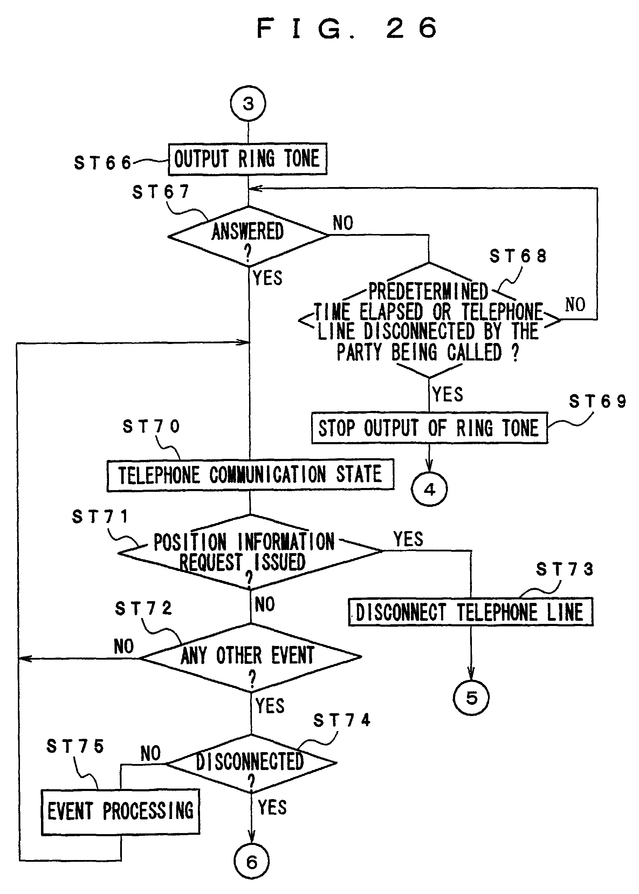

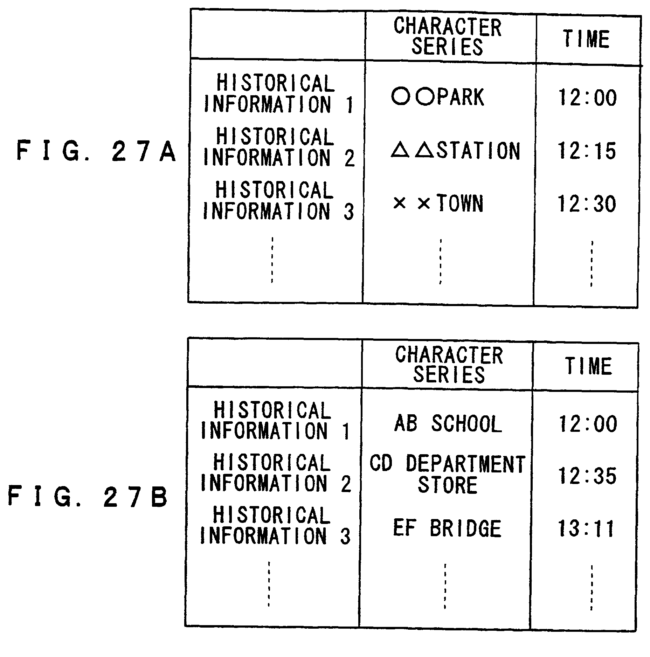

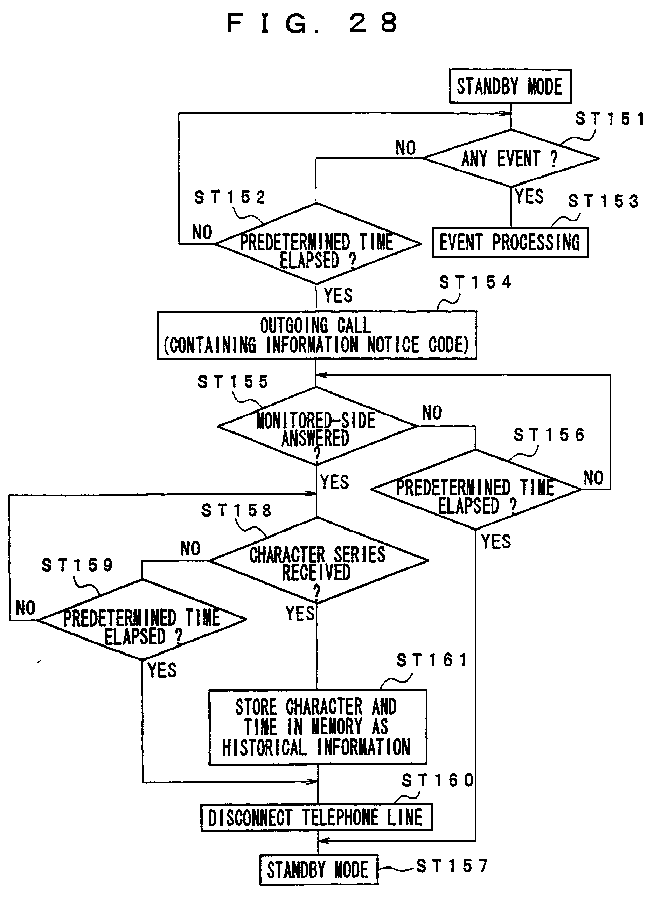

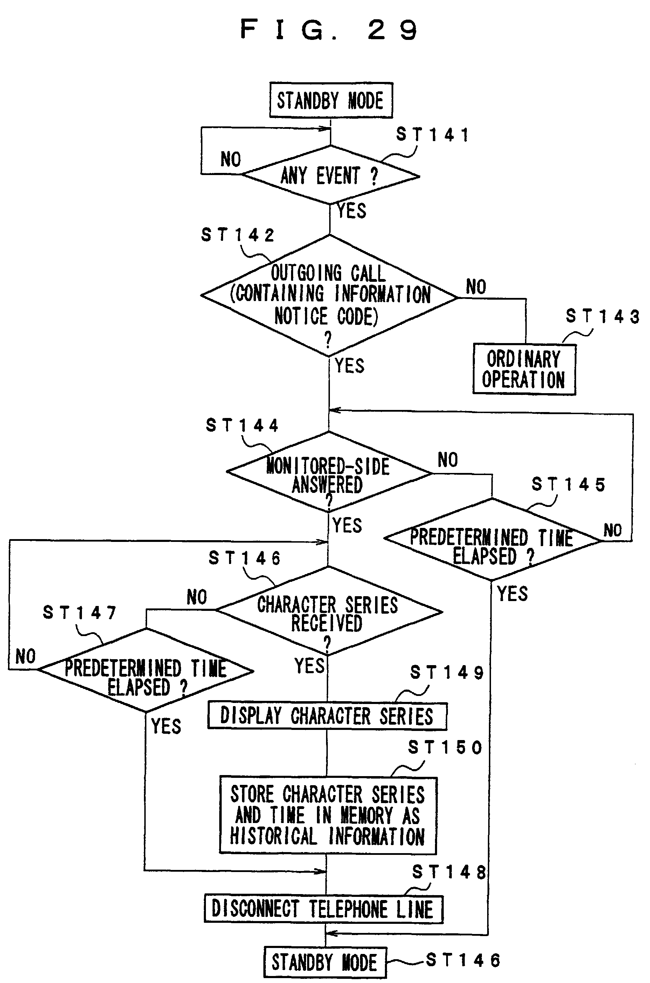

FIG. 1 is a block diagram showing an arrangement of a personal handyphone system (PHS) according to the best mode of this invention. FIG. 2 is a diagram showing an arrangement of a logical control channel (LOCH). FIG. 3 is a diagram showing an arrangement of BCCH. FIG. 4 is a diagram showing an arrangement of SCCH. FIG. 5 is a diagram showing an arrangement of PCH. FIG. 6 is a diagram showing the manner in which the personal handyphone system intermittently receives PCH in the standby mode. FIG. 7 is a diagram showing an arrangement of communication physical slots used when a telephone communication is made. FIG. 8 is a flowchart to which reference will be made in explaining a control operation of a position input operation mode. FIG. 9 is a diagram showing an example of a picture displayed when the on-off of a position investigation mode is selected. FIGS. 10A, 10B are diagrams showing examples of pictures displayed when an information notice code is inputted. FIG. 11 is a flowchart to which reference will be made in explaining an operation of a personal handyphone system according to the embodiment of the present invention (1/2). FIG. 12 is a flowchart to which reference will be made in explaining an operation of a personal handyphone system according to the embodiment of the present invention (2/2). FIG. 13 is a diagram showing an arrangement of one portion of a call set-up message. FIG. 14 is a flowchart to which reference will be made in explaining other operation of the personal handyphone system (1/2). FIG. 15 is a flowchart to which reference will be made in explaining other operation of the personal handyphone system (2/2). FIG. 16 is a flowchart to which reference will be made in explaining other control operation of the position input operation mode. FIG. 17 is a flowchart to which reference will be made in explaining other operation of the personal handyphone system. FIG. 18 is a flowchart to which reference will be made in explaining other operation of the personal handyphone system. FIG. 19 is a flowchart to which reference will be made in explaining other operation of the personal handyphone system (1/2). FIG. 20 is a flowchart to which reference will be made in explaining other operation of the personal handyphone system (2/2). FIG. 21 is a flowchart to which reference will be made in explaining other operation of the personal handyphone system (1/2). FIG. 22 is a flowchart to which reference will be made in explaining other operation of the personal handyphone system (2/2). FIG. 23 is a flowchart to which reference will be made in explaining other operation of the personal handyphone system (1/2). FIG. 24 is a flowchart to which reference will be made in explaining other operation of the personal handyphone system (2/2). FIG. 25 is a flowchart to which reference will be made in explaining other operation of the personal handyphone system (1/2). FIG. 26 is a flowchart to which reference will be made in explaining other operation of the personal handyphone system (2/2). FIGS. 27A, 27B are diagrams showing examples of the manner in which historical information may be stored. FIG. 28 is a flowchart to which reference will be made in explaining an operation of a personal handyphone system on the caller side (monitor side). FIG. 29 is a flowchart to which reference will be made in explaining other operation of the personal handyphone system on the caller side (monitor side).

**BEST MODE FOR CARRYING OUT THE INVENTION**

FIG. 1 shows a personal handyphone system 100 according to an embodiment of the present invention.

This personal handyphone system 100 may comprise a control section 101 including a microcomputer to control the whole of the system, a transmission and reception antenna 102, a wireless section 103 for obtaining a π/4 shift QPSK (Quadrature Phase Shift Keying) signal by down-converting a reception signal having a predetermined frequency received at this antenna 102 and obtaining a transmission signal having a predetermined frequency by up-converting a π/4 shift QPSK signal outputted from a digital modem section, which will be described later on, and a digital modem section 104 for obtaining reception data by demodulating the π/4 shift QPSK signal outputted from this wireless section 103 and obtaining the π/4 QPSK signal by modulating transmission data outputted from a TDMA (Time Division Multiple Access) processing section which will be described later on.

The personal handyphone system 100 may include a TDMA processing section 105 for selecting previously-set data of downlink slot from reception data (time-division-multiplexed data of a plurality of slots) outputted from the digital modem section 104, separating this data into control data and compressed-audio data and also multiplexing compressed-audio data outputted from an audio codec section, which will be described later on, and control data outputted from the control section 101 on previously-set data of uplink slots.

The personal handyphone system 100 may include an audio codec section 106 for obtaining a reception audio signal by effecting a decode processing (including an error-correction processing) on compressed-audio data outputted from the TDMA processing section 105 and obtaining compressed-audio data by effecting a compression-code processing (including a error-correction code addition processing) on a transmission audio signal, a low-frequency amplifier 107 for amplifying a reception audio signal outputted from this audio codec section 106, a speaker 108 serving as a telephone receiver to output voice based on an outputted audio signal from this amplifier 107 and a DTMF demodulator 109 for obtaining a 4-bit (1 nibble) DTMF signal code by demodulating this DTMF signal when the reception audio signal outputted from the audio codec section 106 is the DTMF signal. In this case, the DTMF signal code obtained from the DTMF demodulator 109 may be supplied to the control section 101.

The personal handyphone system 100 may include a microphone 111 serving as a telephone transmitter, a low-frequency amplifier 112 for amplifying an audio signal outputted from this microphone 111, a DTMF modulator 113 for modulating the DTMF signal code supplied from the control section 101 to provide a DTMF signal and a change-over switch 114 for selectively supplying the outputted audio signal from the amplifier 112 or the outputted DTMF signal from the DTMF modulator 113 to the audio codec section 106 as a transmission audio signal.

In this case, the output side of the amplifier 112 may be connected to the fixed terminal $\alpha$ of the change-over switch 114, and the output side of the DTMF modulator 113 may be connected to the fixed terminal $b$. The change-over switch 114 may be operated under control of the control section 101 such that it may be connected to the contact $b$ when the DTMF signal is transmitted and that it may be connected to the contact $\alpha$ when other telephone communication or the like is performed.

The personal handyphone system 100 may include an operation section 115 for enabling a user to execute a variety of key operations, a display section 116 comprised of a liquid-crystal display or the like, a nonvolatile memory 117 and a ring tone output section 118 for outputting a ring tone under control of the control section 101 when a call is coming in. The operation section 115, the display section 116, the nonvolatile memory 117 and the ring tone output section 118 may be each connected to the control section 101.

The operation section 115 may include a call key for instructing an outgoing call or answering to an incoming call, a call end key for ending a call, a ten-key for inputting a telephone number, a key for retrieving telephone directory data, a key for moving the telephone set to a position input operation mode or the like. The display section 116 may display, in addition to the state of the system, selected telephone directory data retrieved by the telephone directory data, telephone numbers inputted by the ten-key or the like. The nonvolatile memory 117 may store therein, in addition to telephone directory data or the like, a combination of base station identification information group and corresponding position information in the position input operation mode and further historical information or the like.

The control section 101 may include a ROM (read only memory) 119 for storing therein a microcomputer operation program, a conversion format for converting a DTMF signal code into a character code and the like and a work RAM (random access memory) 120 for temporarily storing therein the DTMF signal code obtained from the DTMF demodulator 109 and the like, although not described above.

An operation of the personal handyphone system 100 shown in FIG. 1 will be described next. When the power supply is turned on, since synchronization is not established between control channels, a control channel transmitted from the base station may be received and synchronized with control channels. In this case, the personal handyphone system may execute a search operation to sequentially receive control channels of available public base stations so that a control channel whose receive signal strength indicate (RSSI: Receive Signal Strength Indicate) is not only higher than the selection level but also maximum may be selected, whereafter a synchronization between it and the control channel may be established. Thereafter, the personal handyphone system may execute a position registration indicating that it may be located in the area of the base station concerning the control channel whose synchronization was established. This position registration may be executed by using a communication channel. After the position registration was ended, the personal handyphone system may be returned to the reception mode of the control channel whose synchronization was established, and may be placed in the standby mode.

FIG. 2 shows an example of an arrangement of a logical control channel (LCCH). This is the example in which the first slot of TDMA frame may be allocated to a logical control channel (LCCH) and an LCCH super-frame may comprise $m$ intermittent-transmission slots of every nTDMA frames.

The slot used by a base station (CS) may include a 5 [ms] TDMA frame comprising 4 slots of downlink (transmission) and following 4 slots of uplink (reception). Then, slots comprising the downlink logical control channel (LCCH) may exist at every n TDMA frames. That is, the downlink intermittent-transmission period may be 5 x n [ms].

The minimum period (5 x n x m [ms]) of the downlink logical control channel (LCCH) which designates the slot position of all LCCH elements may be defined as an LCCH super-frame. The downlink logical control channel (LCCH) may comprise a broadcast channel (BCCH), a paging channel (PCH) and a separate cell channel (SCCH). The BCCH may be transmitted at the starting slot of the LCCH super-frame, and the starting position of the LCCH may be notified by the transmission of this BCCH. On the other hand, the uplink logical control channel (LCCH) may comprise the separate cell channel (SCCH). The base station (CS) may inform the mobile station (PS) of the slot position of the uplink logical control channel (LCCH) by a control carrier structure information element of wireless channel information notice message on the BCCH.

FIG. 3 shows an arrangement of BCCH. The BCCH may be a downlink one-way channel used by the CS to inform the PS of control information. By this BCCH, there may be transferred information concerning a channel structure, system information or the like.

The BCCH may comprise a preamble pattern (PR), a synchronization unique word (UW), a channel class code (CI), an outgoing call identification code, data (BCCH) and a cyclic error-detection code (CRC). Then, the call identification code (CS-ID) may comprise a operator identification code, a paging area number and an additional ID. Also, the data (BCCH) may comprise octets 1 to 8. Then, low-order 7 bits of the octet 1 may indicate the class of message formed of the octets 2 to 7.

FIG. 4 shows an arrangement of the SCCH. The SCCH may be a point-to-point bidirectional channel for transferring information necessary for call connection between the CS and the PS. In this SCCH, independent information may be transferred at every cell.

The SCCH may comprise a preamble pattern (PR), a synchronization unique word (UW), a channel class code (CI), an outgoing call identification code, an incoming call identification code, data (SCCH) and a cyclic error-detection code (CRC). Then, in the SCCH (downlink), the outgoing call identification code (CS-ID) may comprise a operator identification code, a paging area number and an additional ID. The incoming call identification code may comprise a PS call code (PS-ID). Although not shown, in the SCCH (uplink), the above-mentioned outgoing call identification code may be served as the incoming call identification code, and the above-mentioned incoming call identification code may be served as the incoming call identification code. Also, the data (SCCH) may comprise the octets 1 to 5. A class of a message based on the octets 2 to 5 may be indicated by low-order 7 bits of the octet 1.

The PCH may be a downlink one-way channel of a point-to-multipoint used to simultaneously transfer the same information to a wide area (paging area) of a single cell or a plurality of cells. Based on this PCH, the CS may inform the PS of an incoming call. As shown in FIG. 2, a plurality of PCH (PCH1 to PCHn) may exist in the LCCH super-frame.

FIG. 5 shows an arrangement of PCH. The PCH may comprise a preamble pattern (PR), a synchronization unique word (UW), a channel class code (CI), an outgoing call identification code, data (PCH) and a cyclic error-detection code (CRC). Then, the outgoing call identification code may comprise a operator identification code, a paging area number and an additional ID. Also, the data (PCH) may comprise octets 1 to 8.

In this case, since the PCH may define only the single message, it has no area to indicate the class of message. The 5 to 7 bits of the octet 1 may display a call service class such as an absence of incoming call, a call service based on a PS number of less than BCD 13 digits and a call service based on a PS number of hexadecimal 7 digits. Then, the PS numbers may be displayed by the octets 1 to 7. Further, the reception instruction of the broadcast channel (BCCH) may be executed by the octet 8. When some change occurs in the personal handyphone system upon intermittent reception mode which will be described later on, the PS may receive the BCCH by this reception instruction.

Incidentally, the PS may recognize a received PCH from a plurality of PCH (PCH1 to PCHn) based on the incoming call group number. The PS may calculate the incoming call group number based on the PS number and the contents ($n_{PCH}$, $n_{GROUP}$ control carrier structure) of the BCCH from the CS according to the equation (1) where $n_{PCH}$ represents the same incoming call group number and $n_{GROUP}$ represents the incoming call group separated factor. Moreover, when two frequencies (2LCCH) may be used and the incoming call groups of PCH may be related to each other, an equality $X = 2$ may be satisfied. In other cases, an equality $X = 1$ may be satisfied.

$$\text{Incoming call group number} = (\text{PS number}) \ \text{MOD} \ (n_{PCH} \times n_{GROUP} \times X) + 1 \qquad (1)$$

As described above, after the position registration was ended, the personal handyphone system may be returned to the control channel reception mode and then may be placed in the standby mode. In this standby mode, the personal handyphone system (PS) 10 may be moved to the intermittent reception mode for receiving only the PCH corresponding to the calculated incoming call group number. In this case, since the PCH which corresponds to the calculated incoming call group number exists at every LCCH super-frame, as is conventional, the personal handyphone system may intermittently receive data at every 1.2 seconds, for example, during the standby mode.

FIG. 6 shows the manner in which the personal handyphone system may receive the PCH intermittently in the standby mode. Let it be assumed that PCHa represents a PCH which corresponds to a user's own incoming call group number. Initially, the personal handyphone system may receive the BCCH by continuously receiving control channels. The personal handyphone system may calculate the user's own incoming call group number from information in this BCCH. Then, the personal handyphone system may receive the PCHa by calculating the reception timing based on the resultant incoming call group number. Thereafter, the personal handyphone system may intermittently receive only the PCHa at a constant reception timing.

The manner in which the personal handyphone system may make a telephone communication will be described. In this case, if a user operates a call key after a telephone number of the party being called was inputted by operating the keys on the operation section 115, for example, or after telephone directory data was retrieved, the personal handyphone system may execute an outgoing call processing. Specifically, telephone number data or the like may be supplied from the control section 101 to the TDMA processing section 105 as control data, and may be transmitted to the base station via the control channel. Thus, a telephone line with the party being called may be connected, thereby resulting in the personal handyphone system being placed in a telephone communication enable mode.

While the personal handyphone system may execute a telephone communication by using the communication channel, when the telephone line may be connected, a communication frequency of a communication channel and data of slot position may be transmitted from the base station by using the control channel and may be supplied from the TDMA processing section 105 to the control section 101. The control section 101 may control the wireless section 103 based on communication frequency data in such a manner that the transmission and reception frequency may agree with the communication frequency of the communication channel. Simultaneously, the control section may set slots selected by the TDMA processing section 105 based on the slot position data. Thus, a telephone communication may be executed by using the communication channel notified from the base station.

An arrangement of a communication physical slot used when a telephone conversation is made will be described with reference to FIG. 7. With respect to the slots used by the base station (CS), 4 slots of the downlink (transmission) and 4 slots of the uplink (reception) may constitute the TDMA frame of 5 [ms]. The PS may transmit data to the CS by the uplink set slot in each TDMA frame, and may set data of the downlink set slot as reception data.

Also, when the base station transmits call data as control data by using the control channel and this call data is supplied from the TDMA processing section 105 to the control section 101 thereby to detect an incoming call, the ring tone output section 118 may output a ring tone under control of the control section 101.

If the call key is operated and the called phone is answered under the state in which this call operation is executed, then answer data may be supplied from the control section 101 to the TDMA processing section 105 as control data, and may be transmitted to the base station by the control channel. Thus, a telephone line with the party being called may be connected, thereby resulting in the personal handyphone system being placed in the communication enable mode. Also in this case, a user can make a telephone conversation by using the communication channel notified from the base station.

In the telephone communication state, compressed audio data transmitted via the communication channel may be outputted from the TDMA processing section 105. This compressed audio data may be supplied to the audio codec section 106, in which it may be decoded and then converted into an analog signal. Then, a reception audio signal outputted from the audio codec section 106 may be supplied through the amplifier 107 to the speaker 108, whereby a sound based on the reception audio signal may be emanated from this speaker 108.

The transmission audio signal outputted from the microphone 111 may be amplified by the amplifier 112 and supplied to the audio codec section 106, in which it may be convened into a digital signal and compression-coded, thereby resulting in compressed-audio data being formed. Then, the compressed-audio data outputted from the audio codec section 106 may be supplied to the TDMA processing section 105 and thereby transmitted to the party being called via the communication channel.

The manner in which the personal handyphone system may be operated in the position input operation mode when a user operates the keys on the operation section 115 will be described next with reference to a flowchart of FIG. 8.

When the personal handyphone system is placed in the position input operation mode, initially, it is determined at a step ST1 whether or not the nonvolatile memory 11 has an empty identification information group storage area used to store combinations of base station identification information group and character series serving as corresponding position information. If the nonvolatile memory has the empty identification information group storage area, then control goes to a step ST2 immediately.

If the nonvolatile memory does not have the empty identification information group storage area, then control goes to a step ST3, whereat character series in each combination of base station identification information groups and corresponding character series stored in the identification information group storage area of the nonvolatile memory 117 may be displayed on the display section 116 together with combination numbers. In this case, when the display range of the display section 116 is narrow, a user can display the character series in each combination sequentially and repeatedly by scrolling, for example.

Then, at a step ST4, it is determined whether or not the overwrite permission area is selected by the user when the user operates the operation section 115. It is determined at a step ST5 whether or not a predetermined time, e.g. 30 seconds elapse after character series were displayed at the step ST3. In this case, if any one of combination numbers attached to the character series displayed on the display section 116 at the step ST3 is inputted when the user operates the operation section 115, then it is determined that the overwrite permission area is selected. If it is determined at the step ST4 that the overwrite permission area is selected by the user, then control goes to the step ST2. If it is determined at the step ST5 that the predetermined time elapses, then control goes to a step ST6, whereat the personal handyphone system may be placed in the standby mode.

At the step ST2, the personal handyphone system may execute the search operation to sequentially receive control channels of available public base stations. Then, at a step ST7, it is determined whether or not the control channels are received as described above. If the control channels are not received, then control goes to a step ST8, whereat a failure may be displayed. Thereafter, control goes to a step ST6, whereat the personal handyphone system may be placed in the standby mode. If on the other hand the control channels are received, then control goes to a step ST9, whereat CS-ID concerning the control channel whose receive signal strength indicate falls within the high-order predetermined number may be stored in the identification information group storage area of the nonvolatile memory 117 as base station identification information group (CS-ID group). In this case, if it is determined at the step ST4 that the overwrite permission area is selected by the user, then the above-mentioned data may be stored in the overwrite permission area.

It is determined at a step ST10 whether or not character series may be inputted as position information. Then, it is determined at a step ST11 whether or not a predetermined time elapses until the character series are inputted. In this case, the character series inputted when the user operates the operation section 115 may be displayed on the display section 116, thereby making it possible for the user to visually confirm and determine the inputted character series. Incidentally, if the user selects the overwrite permission area at the step ST4, then first character series in the combinations stored in the overwrite permission area may be displayed on the display section 116 and character series may be inputted in such a manner as to correct such character series.

If character series are not inputted and the predetermined time elapses, then control goes to a step ST10, whereat the base station identification information group stored at the step ST9 may be made invalid. Thereafter, control goes to the step ST6, whereat the personal handyphone system may be placed in the standby mode. If on the other hand it is determined that the character series are inputted before the predetermined time elapses, then control goes to a step ST13, whereat the inputted character series may be paired with the base station identification information group stored at the step ST9 and may be stored in the identification information group storage area of the nonvolatile memory 117. Control goes to a step ST14, whereat the successful position input may be displayed on the display section 116. Thereafter, control goes to the step ST6, whereat the personal handyphone system may be placed in the standby mode.

As described above, each lime the personal handyphone system is placed in the position input operation mode, the personal handyphone system is operated in accordance with the flowchart of FIG. 8. Therefore, when the user moves with the personal handyphone system and sets the personal handyphone system to the position input operation mode at a plurality of positions wherein the user moved, combinations of the base station identification information groups concerning a plurality of positions at which the user moved and character series can be sequentially stored in the identification information group storage area of the nonvolatile memory 117.

While the successful position input is displayed on the display section 16 at the step ST14 in the flowchart of FIG. 8, the present invention is not limited thereto, and the successful position input can be informed to the user by sounds. Although not shown in the flowchart of FIG. 8, if the base station identification information groups which will be stored in the identification information group storage area of the nonvolatile memory 117 at the step ST9 agree with the base station identification information groups in predetermined combinations which were already stored, then a message indicating such coincidence may be displayed on the display section 16 together with the corresponding character series. Thus, the user can determine whether or not the base station identification information group should be stored. Alternatively, the personal handyphone system may be immediately placed in the standby mode. Thus, it may become possible to avoid the same information from being overlapped in the identification information group storage area of the nonvolatile memory 117.

If the personal handyphone system is placed in the on-off selection state of the position investigation mode when the user operates the operation section 115, then the display section 116 may display thereon a picture shown in FIG. 9, for example. In this state, if "1" key is depressed, then the position investigation mode may be turned on. If "3" key is depressed, then the position investigation mode may be turned off. As will be described later on, only when the position investigation mode is turned on, data of character series may be transmitted to the caller side as position information. Incidentally, only when combinations of base station identification information group and corresponding character series may be stored in the identification information group storage area of the nonvolatile memory 117, the position investigation mode can be turned on. Thus, it may be possible to avoid the position investigation mode from being turned on uselessly.

If the personal handyphone system is placed in the information notice code input state by the user when the user operates the operation section 115, then the display section 116 displays a picture shown in FIG. 10A, for example. In this state, if the user inputs an information notice code, e.g. character series of "WHERE ARE YOU NOW?" by operating the operation section 115, then the display section 116 displays a picture shown in FIG. 10B, thereby resulting in the information notice code being set.

The manner in which the control section 101 in the personal handyphone system 100 may control respective sections will be described next with reference to flowcharts of FIGS. 11 and 12.

Initially, at a step ST21, the personal handyphone system may execute a search operation to sequentially receive control channels of available public stations. At a step ST22, CS-ID concerning control channels whose receive signal strength indicate fall within a high-order predetermined number may be stored in the RAM 120 as the base station identification information group (CS-ID group). If the above-mentioned control channel cannot be received, then no CS-ID may not be stored in the RAM 120 at all as the base station identification information group.

Then, it is determined at a step ST23 whether or not there is an event such as an outgoing call or an incoming call. At a step ST24, it is determined whether or not a predetermined time as an event standby mode, e.g. 15 minutes may elapse. If there is no event and the predetermined time elapses, then control goes back to the step ST21. That is, if there is no event, then the personal handyphone system may execute the search operation at every predetermined time and the CS-ID concerning the control channel whose receive signal strength indicate falls within the high-order predetermined number may be stored in the RAM 120 as the base station identification information group (CS-ID group). Thus, the base station identification information group stored in the RAM 120 may be updated at every predetermined time.

If it is determined at the step ST23 that there is the event, then control goes to a step ST25, whereat it is determined whether or not the event is an incoming call concerning a designated caller number (telephone number). If it is determined that the event is not the incoming call concerning the designated caller number, then control goes to a step ST26, whereat the personal handyphone system may execute the ordinary operation corresponding to such event. If on the other hand it is determined that such event is the incoming call concerning the designated caller number, then control goes to a step ST27, whereat it is determined whether or not the position investigation mode is turned on. If it is determined that the position investigation mode is not turned on, then control goes to the step ST26, whereat the personal handyphone system may execute the ordinary operation corresponding to the incoming call. Thus, it may be possible to avoid position information from being transmitted to the party being called by the setting on the personal handyphone system 100 itself.

If it is determined at the step ST27 that the position investigation mode is turned on, then control goes to a step ST28 (FIG. 12), whereat it is determined whether or not the code which agrees with the above-mentioned previously-set information notice code is located at the incoming sub-address of the call set-up message transmitted from the base station when an incoming call arrives. In this connection, the call set-up message may include, as shown in FIG. 13, an outgoing call telephone number serving as a caller telephone number (outgoing call number), the outgoing sub-address accompanying with this outgoing call telephone number, an incoming call-side telephone number serving as a caller (incoming side) telephone number (incoming telephone number) and the incoming sub-address accompanying with this incoming call-side telephone number.

If it is determined at the step ST28 that the code which agrees with the information notice code is located at the incoming sub-address, then control goes to a step ST29. In the step ST29, the number of coincident CS-IDs in each of a plurality of combinations may be checked by comparing the base station identification information group (CS-ID group) stored in the RAM 120 at the step ST22 and the base station identification information groups (CS-ID groups) of a plurality of combinations stored in the identification information group storage area of the nonvolatile memory 117, thereby obtaining the character series comprising the combination having the maximum number of coincident base station identification information. This character series may indicate the position of the personal handyphone system 100, i.e. the position of the user of this personal handyphone system 100.

When no CS-ID is stored in the RAM 120 at all as the base station identification information group, it is natural that the number of the coincident base station identification information should be zero. When the number of the coincident base station identification information is zero, independently of the above-mentioned character series concerning a plurality of combinations, character series such as "PRESENT POSITION IS NOT REGISTERED" may be obtained from the nonvolatile memory 117 or the like.

Then, at a step ST30, the personal handyphone system may automatically answer to the incoming call. At a step ST31, the personal handyphone system transmit data of such character series to the caller side (monitor side). Thereafter, control goes to a step ST32, whereat a telephone line may be disconnected. At a step ST33, the personal handyphone system may be placed in the standby mode. The data of character series may be transmitted to the caller side by the DTMF signal, for example. In this case, the switch 114 may be connected to the contact *b*. Then, the DTMF signal corresponding to the data of the character series may be supplied from the control section 101 to the DTMF modulator 113. The DTMF signal corresponding to the data of the character series outputted from this DTMF modulator 113 may be supplied to the audio codec section 106 as the transmission audio signal.

In this embodiment, while the data of the character series may be transmitted to the party being called as position information under the condition that the incoming call is the incoming call concerning the designated caller number and that the code which agrees with the information notice code is located at the incoming sub-address, the present invention is not limited thereto, and the data of the character series can be transmitted only under the condition that the incoming call is the incoming call concerning the designated caller number or that the code which agrees with the information notice code may be located at the incoming sub-address.

However, if it is determined that the condition is only the condition that the incoming call should be the incoming call concerning the designated caller number, then the character series may be transmitted to all of incoming calls concerning the designated caller number as position information so that the user cannot make an ordinary outgoing call by using the personal handyphone system of such designated caller number. On the other hand, if it is determined that the condition may be the only condition that the code which agrees with the information notice code is located at the incoming sub-address, when the code which agrees with the information notice code is located at the incoming sub-address, the user may transmit position information to other personal handyphone system than the personal handyphone system of the designated caller number. There then arises a problem of disturbing user's privacy.

If it is determined at the step ST28 that the code which agrees with the information notice code is not located at the incoming sub-address, then control goes to a step ST34, whereat the ring tone output section 118 may be controlled so as to output a ring tone. Then, it is determined at a step ST35 whether or not the user operates the operation section 115. At a step ST36, it is determined whether a predetermined time elapses after the ring tone was emanated or whether the telephone line was disconnected by the party being called (caller side). If it is determined that the called phone is not answered, the predetermined time elapses or that the telephone line is disconnected by the party being called, then control goes to a step ST37, the ring tone output section 118 may be controlled so as to stop the emanation of the ring tone. Then, control goes back to the step ST33, whereat the personal handyphone system may be placed in the standby mode.

[0065]

If it is determined that the called phone is answered before the predetermined time elapses or the telephone line is disconnected by the party being called, then control goes to a step ST40, whereat the personal handyphone system may be placed in the telephone conversation state. Then, control goes to a step ST41, whereat it is determined whether or not the position information request is issued from the caller side (monitor side). Then, it is determined at a step ST42 whether or not there are other events. When the DTMF signal code indicative of the position information request may be obtained from the DTMF demodulator 109, it is determined that the position information request is issued.

If it is determined that the position information request is issued, then control goes to a step ST43, whereat the number of coincident CS-ID in each of a plurality of combinations may be checked to thereby obtain the character series comprising the combination having the maximum number of coincident base station identification information similarly to the step ST29. If the number of coincident base station identification information is zero, then it is needless to say that the character series such as "PRESENT POSITION IS NOT REGISTERED" may be obtained from the nonvolatile memory 117. Then, control goes to a step ST44, whereat data of such character series may be transmitted to the party being called. Thereafter, control goes to the step ST42. As described above, the party being called can receive the data of the character series as the position information via the DTMF signal by sending the position information request of the DTMF signal in the telephone communication state.

Incidentally, if it is determined at the step ST42 that there are other events and if it is determined at the step ST45 that such event is disconnection (disconnection operation made by the user or disconnection made by the party being called), then control goes to the step ST32, whereat the telephone line may be disconnected. Then, the personal handyphone system may be placed in the standby mode at the step ST33. If on the other hand the event is not the disconnection, then control goes to a step ST46, whereat the processing corresponding such event may be executed.

As described above, according to this embodiment, if the incoming call is the incoming call concerning the designated caller number and the code which agrees with the information notice code is located at the incoming sub-address, then the personal handyphone system may automatically answer to the incoming call and may transmit the data of the character series to the party being called as the position information. Also, if the personal handyphone system receives the position information request from the caller side in the telephone communication state, then the personal handyphone system may transmit the data of the character series to the caller side as the position information. Therefore, the caller side is able to easily recognize the position of the user of the personal handyphone system 100 by displaying the position with the transmitted data of the character series.

While the data of the character series serving as the position information was transmitted to the caller side as it is as described above, the present invention is not limited thereto, and data which results from adding data indicative of accuracy to the data of the character series in response to the number of coincident CS-ID may be transmitted to the caller side. Thus, the caller side may become able to recognize the accuracy of the position indicated by the character series. As the data indicative of the accuracy, there may be considered data of character series such as "NEAR ..." or "AROUND ..." if the combination has less coincident base station identification information.

Also, according to the above-mentioned embodiment, the number of coincident CS-ID in each of a plurality of combinations may be detected by comparing the base station identification information group (CS-ID group) stored in the RAM 120 with the base station identification information groups (CS-ID groups) of each of a plurality of combinations stored in the identification information group storage area of the nonvolatile memory 117. However, the present invention is not limited thereto, and the base station identification information group of each of a plurality of combinations stored in the identification information group storage area of the nonvolatile memory 117 and the base station identification information group stored in the RAM 120 may be divided into a plurality of groups based on the receive signal strength indicate. Then, the number of coincident base station identification information may be detected by comparing the base station identification information group stored in the RAM 120 and the base station identification information groups of each of a plurality of combinations stored in the base station identification information group storage area of the nonvolatile memory 117 at every group. Thus, it may become possible to obtain the character series as position information of higher accuracy.

Moreover, while the base station identification information group was obtained at every predetermined time, e.g. 15 minutes and stored in the RAM 120 in the standby mode as described above, the present invention is not limited thereto, and the operation for obtaining this base station identification information group and storing the same in the RAM 120 may be executed when received data is deteriorated or an incoming call arrives from the caller having the designated telephone number. When the received data is deteriorated, the personal handyphone system should execute the search operation in order to obtain the control channel in which the synchronization should be established. This search operation may be served also as the above-mentioned search operation for obtaining the base station identification information group.

Incidentally, when an incoming call arrives from the caller having the designated telephone number, if the operation for obtaining the base station identification information group is executed, then thereafter the personal handyphone system may call someone having a designated telephone number and transmit the data of the character series serving as the position information to the party being called. In this case, since the personal handyphone system should obtain the base station identification information group by the search operation, the personal handyphone system should call someone in order to transmit the data of the character series to the party being called.

The manner in which the control section 101 in the personal handyphone system 100 in this case may control respective sections will be described with reference to flowcharts of FIGS. 14 and 15.

Initially, it is determined at a step ST51 whether or not there is an event such as an outgoing call or an incoming call. If there is the event, control goes to a step ST52, whereat it is determined whether or not the event is an incoming call concerning a designated caller number (telephone number). If the event is not the incoming call concerning the designated caller number, then control goes to a step ST53, whereat the personal handyphone system may be controlled so as to execute the ordinary operation corresponding to such event. If on the other hand the event is the incoming call concerning the designated caller number, then control goes to a step ST54, whereat it is determined whether or not the position investigation mode is turned on. If the position investigation mode is not turned on, then control goes to the step ST53, whereat the personal handyphone system may be controlled so as execute the ordinary operation corresponding to the incoming call. Thus, it is possible to avoid the position information from being transmitted to the party being called by the setting in the personal handyphone system 100 itself.

If it is determined at the step ST54 that the position investigation mode is turned on, then control goes to a step ST55, whereat it is determined whether or not the code which agrees with the above-mentioned previously-set information notice code is located at the incoming sub-address of the call set-up message transmitted from the base station when an incoming call arrives. If the code which agrees with the information notice code is located at the incoming sub-address, then control goes to a step ST56, whereat the personal handyphone system may execute the search operation to sequentially receive control channels of available public base stations. Control goes to a step ST57, whereat CS-ID concerning the control channel whose receive signal strength indicate may fall within the high-order predetermined number may be stored in the RAM 120 as the base station identification information group (CS-ID group). If the above-mentioned control channel cannot be received, then no CS-ID is stored at all in the RAM 120 as the base station identification information group.

At a step ST58, the personal handyphone system may check the number of coincident CS-ID in each of a plurality of combinations by comparing the base station identification information group (CS-ID group) stored in the RAM 120 with the base station identification information group (CS-ID group) of a plurality of combinations stored in the identification information group storage area of the nonvolatile memory 117. Then, the personal handyphone system may obtain the character series comprising the combination having the maximum number of coincident base station identification information. This character series may indicate the position of the personal handyphone system 100, i.e. the position of the user of this personal handyphone system 100.

In the state in which no CS-ID is stored at all in the RAM 120 as the base station identification information group, it may be natural that the number of coincident base station identification information should be zero. When the number of coincident base station identification information is zero as described above, independently of the above-mentioned character series concerning a plurality of combinations, the character series such as "PRESENT POSITION IS NOT REGISTERED" may be obtained from the nonvolatile memory 117 or the like.

At a step ST59, the personal handyphone system may call the caller side (monitor side). Control goes to a step ST60, whereat it is determined whether or not the caller side answers to the incoming call. Control goes to a step ST61, whereat it is determined whether or not a predetermined time elapses after calling someone. If the caller side does not answer to the incoming call and the predetermined time elapsed, then control goes to a step ST62, whereat the personal handyphone system is placed in the standby mode. If on the other hand the caller side answers to the incoming call before the predetermined time elapses, then control goes to a step ST63, whereat the personal handyphone system may transmit the data of the character series obtained at the above-mentioned step ST58 to the party being called by the DTMF signal. Thereafter, the telephone line may be disconnected at a step ST64, and control goes to a step ST62, whereat the personal handyphone system may be placed in the standby mode.

If it is determined at the step ST55 that the code which agrees with the information notice code is not located at the incoming sub-address, then control goes to a step ST66 (FIG. 15), whereat the control section may control the ring tone output section 118 so as to output a ring tone. Control then goes to a step ST67, whereat it is determined whether or not the user operates the operation section 115. Control goes to a step ST68, whereat it is determined whether a predetermined time elapses after a ring tone was outputted or the telephone line is disconnected by the party being called. If the party being called does not answer to the incoming call, the predetermined time elapses or the telephone line is disconnected by the party being called, control goes to a step ST69, whereat the control section controls the ring tone output section 118 so as to cease the output of the ring tone. At the step ST62, the personal handyphone system may be placed in the standby mode.

If the party being called answers to the incoming call before the predetermined time elapses or the telephone line is disconnected by the party being called, then control goes to a step ST70, whereat the personal handyphone system may be placed in the telephone communication state. Then, control goes to a step ST71, whereat it is determined whether or not the caller side (monitor side) issues the position information request. It is determined at a step ST72 whether or not there are other events. When the DTMF signal indicative of the position information request is outputted from the DTMF demodulator 109, it is determined that the caller side may issue the position information request.

If the position information request is issued from the caller side, then control goes to a step ST73, whereat the telephone line is disconnected. Thereafter, control goes to the step ST56, whereat the personal handyphone system may obtain the character series as the position information by executing the search operation, may make an incoming call to the party being called (monitor side) and may transmit the data of such character series to the caller side via the DTMF signal similarly as described above (see steps ST56 to ST63). As described above, the caller side (monitor side) may be able to receive the data of the character series as the position information via the DTMF signal by transmitting the position information request via the DTMF signal in the telephone communication state.

If it is determined at the step ST72 that there is other event and if it is determined at the step ST74 that such event is the disconnection (disconnection operation made by the user or the disconnection operation made by the party being called), then control goes to the step ST64, whereat the telephone line is disconnected or control goes to the step ST62, whereat the personal handyphone system is placed in the standby mode. If on the other hand it is determined that the event is not the disconnection, control goes to a step ST76, whereat the personal handyphone system may execute the processing corresponding to such event.

Also, while the data of the character series is transmitted to the caller side (monitor side) as the position information as described above, not only the data of the character series but also audio data, image data and the like may be transmitted to the caller side as the position information. Thus, it may become possible for the caller side (monitor side) to obtain the position information in a desired data format.

The manner in which the personal handyphone system is operated when audio data can be transmitted together with the data of the character series as the position information will be described below.

Initially, the manner in which the personal handyphone system is operated when it is placed in the position input operation mode by the user operating the keys of the operation section will be described with reference to a flowchart of FIG. 16. In the flowchart of FIG. 16, steps corresponding to those of the flowchart of FIG. 8 are marked with identical reference numerals, and therefore need not be described in detail.

After CS-ID concerning the control channel whose receive signal strength indicate may fall within the high-order predetermined number may be stored in the identification information group storage area of the nonvolatile memory 117 as the base station identification information group (CS-ID group) at the step ST9, control goes to the step ST15, whereat it is determined whether or not the character series or audio data may be inputted as the position information. In this case, the character series may be inputted by the user when the user operates the operation section 115 or digital data may be inputted from the microphone 111 after the personal handyphone system was placed in the audio input mode by the user when the user operates the operation section.

If the character series and the audio data are not inputted and if the predetermined time elapsed, then control goes to the step ST12, whereat the base station identification information group stored at the step ST9 may be made invalid. Thereafter, control goes to the step ST6, whereat the personal handyphone system is placed in the standby mode. If on the other hand the character series and audio data are inputted before the predetermined time elapses, then control goes to the step ST16, whereat the inputted character series and audio data are paired with the base station identification information group stored at the step ST9 and stored in the identification information group storage area of the nonvolatile memory 117. Then, control goes to the step ST14, whereat the successful position input may be displayed on the display section 116. Thereafter, control goes to the step ST6, whereat the personal handyphone system may be placed in the standby mode. A rest of operations may be similar to that of operations of the flowchart of FIG. 8.

As described above, since the personal handyphone system is operated in accordance with the flowchart of FIG. 16 each time it is set to the position input operation mode, when the user moves with the personal handyphone system 100 and the personal handyphone system is set to the position input operation mode at a plurality of positions wherein the user moved, only combinations of base station identification information groups concerning a plurality of positions wherein the user moved and the character series and the audio data can be sequentially stored in the identification information group storage area of the nonvolatile memory 117.

While the user inputted audio data from the microphone as described above, the present invention is not limited thereto, and audio data may automatically be generated by a speech synthesis processing within the control section 101 based on the inputted data of the character series. As will be described later on, audio data may not be generated until audio data is designated by the caller side (monitor side) as a notice method. In that case, only combinations of base station identification information groups concerning a plurality of positions wherein the user moved and the character series may be stored in the identification information group storage area of the nonvolatile memory 117.

The manner in which the control section 101 may control respective sections of the personal handyphone system 100 capable of transmitting audio data as well as data of character series as position information will be described next with reference to a flowchart of FIG. 17. In this case, designated contents of the notice method from the caller side (monitor side) may be obtained when a call is coming in. In the flowchart of FIG. 17, steps corresponding to those of the flowchart of FIG. 12 are marked with identical reference numerals, and therefore need not be described in detail.

Steps provided ahead of the step ST28 are similar to those of the flowchart of FIG. 11. If it is determined at the step ST28 that the code which agrees with the information notice code is located at the incoming sub-address, then control goes to a step ST80, whereat designated contents of the notice method from the caller side may be stored in the RAM 120. Then, control goes to the step ST29. In this case, information indicative of the notice method (audio data or character data) may be distributed to the incoming sub-address. If the notice method is not distributed to the incoming sub-address, then the designated contents of the notice method may be set to "NOT DESIGNATED".

Also, at the step ST30, the personal handyphone system may automatically answer to the caller. Then, control goes to a step ST81, whereat it is determined whether the designated contents of the notice method may be audio data or others. Since it is previously arranged such that the character series may be transmitted to the caller side if the designated contents are "NOT DESIGNATED", it is determined whether the designated contents are audio data or others. When it is previously arranged such that audio data may be transmitted to the caller side if the designated contents may be "NOT DESIGNATED", it is determined whether the designated contents may be character series.

If it is determined at the step ST81 that the designated contents are audio data, then control goes to a step ST82, whereat audio data corresponding to the character series obtained at the step ST29 may be transmitted to the caller side (monitor side). Thereafter, the telephone line may be disconnected at the step ST32. Then, control goes to the step ST33, whereat the personal handyphone system may be placed in the standby mode. On the other hand, if it is determined at the step ST81 that the designated contents are others, then control goes to a step ST83, whereat the data of the character series obtained at the step ST29 may be transmitted to the caller side. Thereafter, the telephone line may be disconnected at the step ST32, and control goes to the step ST33, whereat the personal handyphone system may be placed in the standby mode. As described above, the caller side (monitor side) is able to receive the position information from the monitored side by designating the notice method based on such notice method.

Moreover, the character series may be obtained as the position information at the step ST43. Then, control goes to a step ST84, whereat it is determined whether or not the caller side (monitor side) may designate the notice method. It is determined at a step ST85 whether or not a predetermined time elapses as a time for awaiting the designation of the notice method. When the DTMF signal code indicative of the notice method is obtained from the DTMF demodulator 109, it is determined that the notice method may be designated. Then, control goes to a step ST86, whereat the designated contents of the notice method may be stored in the RAM 120. Incidentally, if the notice method is not designated by the caller side (monitor side) within the predetermined time, then the designated contents may be set to "NOT DESIGNATED".

Next, it is determined at a step ST87 whether the designated contents of the notice method may be audio data or others. If it is determined that the designated contents may be the audio data, then control goes to a step ST88, whereat audio data corresponding to the character series obtained at the step ST43 may be transmitted to the caller side (monitor side), Then, control goes to the step ST42. On the other hand, if it is determined at the step ST87 that the designated contents may be others, then control goes to a step ST89, whereat the data of the character series obtained at the step ST43 may be transmitted to the caller side, whereafter control goes to the step ST42. As described above, the caller side (monitor side) may transmit the position information request by the DTMF signal during the telephone communication mode, and further the caller side may be able to receive the position information from the monitored side based on a notice method by designating the notice method. A rest of operations may be similar to that of operations in the flowchart of FIG. 12.

Other example of the manner in which the control section 101 of the personal handyphone system 100 capable of transmitting character series data and audio data serving as position information may control respective sections will be described next with reference to a flowchart of FIG. 18. In this case, the caller side (monitor side) may designate the notice method after the personal handyphone system automatically answered to the incoming call. In the flowchart of FIG. 18, steps corresponding to those of the flowcharts of FIGS. 12 and 17 are marked with the identical reference numerals, and therefore need not be described in detail.

Steps which precedes the step ST28 are similar to those of the flowchart of FIG. 11. After the personal handyphone system automatically answered to the incoming call, it is determined at a step ST91 whether or not the notice method is designated by the caller side (monitor side). Then, at a step ST92, it is determined whether or not a predetermined time elapses as a time for awaiting the designation of the notice method. When the DTMF signal indicative of the notice method is obtained from the DTMF demodulator 109, it is determined that the notice method is designated. Then, at the step ST80, the designated contents of the notice method maybe stored in the RAM 120. Incidentally, if the notice method is not designated by the caller side (monitor side) within the predetermined time, then the designated contents may be set to "NOT DESIGNATED".

At the next step ST81, it is determined whether the designated contents of the notice method may be audio data or others. If the designated contents may be audio data, then control goes to a step ST82, whereat the audio data corresponding to the character series obtained at the step ST29 may be transmitted to the caller side (monitor side). Then, the telephone line may be disconnected at the step ST32. Control goes to the step ST33, whereat the personal handyphone system may be placed in the standby mode. On the other hand, it is determined at a step ST87 that the designated contents may be others, then control goes to a step ST83, whereat the character series data obtained at the step ST29 may be transmitted to the caller side. Then, the telephone line may be disconnected at the step ST32. Control goes to the step ST33, whereat the personal handyphone system may be placed in the standby mode. As described above, the caller side may be able to receive the position information from the monitored side based on a notice method by designating the notice method with the DTMF signal within a predetermined time after the personal handyphone system automatically answered to the incoming call thereby to connect the telephone line. A rest of operations are similar to that of the operations of the flowcharts of FIGS. 12 and 17.

A further example of the manner in which the control section 101 of the personal handyphone system 100 capable of transmitting character series data and audio data as position information may control respective sections will be described next with reference to flowcharts of FIGS. 19 and 20. In this case, the designated contents of the notice method from the caller side (monitor side) may be obtained when a call is coming in. In the flowcharts of FIGS. 19 and 20, steps corresponding to those of FIGS. 14 and 15 are marked with identical reference numerals, and therefore need not be described in detail.

If it is determined at the step ST55 whether the code which agrees with the information notice code is located at the incoming sub-address, then control goes to a step ST101, whereat the designated contents of the notice method from the caller side may be stored in the RAM 120. Then, control goes to the step ST56. In this case, the information of the notice method (audio or character) may be distributed to the incoming sub-address. Incidentally, if the notice method is distributed to the notice method, then the designated contents of the notice method may be set to "NOT DESIGNATED".

Also, if it is determined at the step ST60 that the caller side (monitor side) answers to the incoming call, then control goes to a step ST102, whereat it is determined whether the designated contents of the notice method may be audio data or others. Since it is previously set that the character series may be transmitted to the caller side when the designated contents are "NOT DESIGNATED", it is determined whether the designated contents may be audio data or others. If it is previously set that audio data should be transmitted to the caller side when the designated contents are "NOT DESIGNATED", then it is determined whether the designated contents may be character series or others.

If it is determined at the step ST102 that the designated contents may be audio data, then control goes to a step ST103, whereat audio data corresponding to the character series obtained at the step ST58 may be transmitted to the caller side (monitor side). Then, the telephone line may be disconnected at the step ST64, and the personal handyphone system may be placed in the standby mode at the step ST62. If on the other hand it is determined at the step ST102 that the designated contents may be others, then control goes to a step ST104, whereat the character series data obtained at the step ST58 may be transmitted to the caller side. Thereafter, control goes to the step ST64, whereat the telephone line may be disconnected. Then, at the step ST62, the personal handyphone system may be set to the standby mode. As described above, the caller side (monitor side) can receive the position information from the monitored side based on the notice method by designating the notice method.

After it is determined at the step ST71 that the position information may be requested, it is determined at a step ST105 whether or not the notice method is designated by the caller side (monitor side). Then, it is determined at a step ST106 whether or not a predetermined time serving as a time for awaiting the designation of the notice method elapses. When the DTMF signal code indicating the notice method is obtained from the DTMF demodulator 109, it is determined that the notice method may be determined by the caller side. Then, control goes to the step ST73, whereat the telephone line may be disconnected. Then, control goes to the step ST01, whereat the designated contents of the notice method may be stored in the RAM 120. Incidentally, if the notice method is not designated by the caller side (monitor side) within the predetermined time, then the designated contents may be set to "NOT DESIGNATED".

After the operation of the step ST101, the personal handyphone system may execute the search operation similarly as described above to thereby obtain the character series as the position information. Then, the personal handyphone system may make an outgoing call to the caller side (monitor side), and may transmit the position information to the caller side by the designated notice method (see steps ST56 to ST103, 104). As described above, during the telephone communication mode, the caller side (monitor side) may transmit the position information request by the DTMF signal and may receive the position information from the monitored side by designating the notice method based on the notice method. A rest of operations is similar to that of operations of the flowcharts of FIGS. 14 and 15.

Other example of the manner in which the control section 101 of the personal handyphone system 100 capable of transmitting character series data and audio data as position information may control respective sections will be described next with reference to the flowcharts of FIGS. 21 and 22. In this case, the caller side (monitor side) may designate the notice method after the personal handyphone system automatically answered to an incoming call. In the flowcharts of FIGS. 21 and 22, steps corresponding to those of the flowcharts of FIGS. 19 and 20 are marked with the same reference numerals, and therefore need not be described in detail.

If it is determined at the step ST55 that the code which agrees with the information notice code is located at the incoming sub-address, then control goes to the step ST107, whereat the personal handyphone system automatically answers to the incoming call. Then, control goes to the step ST108, whereat it is determined whether or not the caller side (monitor side) designates the notice method. Then, it is determined at the step ST109 whether or not the predetermined time elapses as a time for awaiting the designation of the notice method. When the DTMF signal indicative of the notice method is obtained from the DTMF demodulator 109, it is determined that the notice method may be designated by the caller side. Then, control goes to the step ST110, whereat the telephone line may be disconnected. Then, control goes to the step ST101, whereat the designated contents of the notice method may be stored in the RAM 120. Incidentally, if the notice method is not designated by the caller side (monitor side) within the predetermined time, then the designated contents may be set to "NOT DESIGNATED".

Also, if it is determined at the step ST71 (FIG. 22) that the caller side (monitor side) issues the request of the position information, then since the telephone line was already connected, control immediately goes to the step ST108, whereat it is determined whether or not the notice method is designated by the caller side. A rest of operations is similar to that of operations of the flowcharts of FIGS. 14, 15, 19 and 20.

While only the position information of one place may be transmitted to the caller side in response to the position information request from the caller side (monitor side) as described above, the present invention is not limited thereto, and historical information containing time information also may be transmitted simultaneously together with the position information. Thus, it may become possible for the caller side to easily learn the history in which the user (personal handyphone system 100) had moved.

The manner in which the personal handyphone system is operated when historical information also is transmitted in response to the position information request will hereinafter be described with reference to the flowcharts of FIGS. 23 and 24. In the flowchart of FIGS. 23 and 24, steps corresponding to those of FIGS. 11 and 12 are marked with identical reference numerals, and therefore need not be described in detail.

After the base station identification information group (CS-ID group) was stored in the RAM 120 at the step ST22, control goes to a step ST121, whereat the number of coincident CS-ID of each of a plurality of combinations may be checked by comparing the base station identification information group (CS-ID group) with the respective base station identification information groups (CS-ID groups) of a plurality of combinations stored in the identification information group storage area of the nonvolatile memory 117 to thereby obtain the character series comprising the combination having the maximum number of coincident base station identification information. This character series may indicate the position of the personal handyphone system 100, i.e. the position of the user who carries this personal handyphone system 100.

Under the condition that no CS-ID is stored at all in the RAM 120 as the base station identification information group, it is natural that the number of coincident base station identification information should be zero. When the number of the coincident base station identification information is zero as described above, independently of the above-mentioned character series concerning a plurality of combinations, the character series indicating "PRESENT POSITION IS NOT REGISTERED" or the like may be obtained from the nonvolatile memory 117 or the like.

At the next step ST122, the character series obtained at the step ST121 and a time obtained at that very moment may be paired and stored together in the nonvolatile memory 117 as historical information. Then, control goes to the step ST23, whereat it is determined whether or not there is an event such as an outgoing call or an incoming call. Then, it is determined at the step ST24 whether or not the predetermined time, e.g. 15 minutes may elapse. If it is determined that there is no event and that the predetermined time elapses, then control goes back to the step ST21. That is, if there is no event, then the personal handyphone system may execute the search operation at every predetermined time, and the historical information comprising the pair of the character series as the position information and the time obtained at that very moment may be sequentially stored in the memory. FIG. 27A shows an example of the manner in which historical information may be stored in that case.

The maximum number of historical information stored in the nonvolatile memory 117, for example, may be limited to the constant number from a standpoint of memory capacity. Therefore, when historical information of the maximum number were already stored in the nonvolatile memory 117, old historical information may be erased one by one. Also, while the historical information of every predetermined time may be written in the nonvolatile memory 117 as described above, it is possible to set this predetermined time by operating the operation section 115 of the personal handyphone system 100. Alternatively, it is possible to set this predetermined time by transmitting a command from the caller side (monitor side) in the form of the DTMF signal, for example.

Moreover, if it is determined at the step ST28 that the code which agrees with the information notice code is located at the incoming sub-address of the call set-up message transmitted from the base station when a call is coming in, then control goes to the step ST123, whereat the control section may execute the search operation to sequentially receive the control channels of available public base stations. At the step ST124, CS-ID concerning the control channel whose receive signal strength indicate may fall within the high-order predetermined number may be stored in the RAM 120 as the base station identification information group (CS-ID). When the above-mentioned control channel cannot be received, the personal handyphone system may be placed in the state in which no CS-ID is stored at all in the RAM 120 as the base station identification information group.

Then, at a step ST125, the number of coincident CS-ID in each of a plurality of combinations may be checked by comparing the base station identification information group (CS-ID group) stored in the RAM 120 with base station identification information groups (CS-ID groups) of a plurality of combinations stored in the identification information group storage area of the nonvolatile memory 117 to thereby obtain the character series comprising the combination having the maximum number of coincident base station identification information. This character series may indicate the position of the personal handyphone system 100, i.e. the position of the user who carries this personal handyphone system 100.

Under the condition that no CS-ID is stored at all in the RAM 120 as the base station identification information group, it is natural that the number of coincident base station identification information should be zero. If the number of coincident base station identification information may be zero as described above, then independently of the above-mentioned character series concerning a plurality of combinations, the character series such as "PRESENT POSITION IS NOT REGISTERED" may be obtained from the nonvolatile memory 117 or the like.

At the next step SF126, the personal handyphone system may make an outgoing call to the caller side (monitor side). Then, control goes to a step ST127, whereat it is determined whether or not the caller side answers to the incoming call. Also, it is determined at a step ST128 whether or not a predetermined time elapses after the outgoing call was made. If the caller side does not answer to the incoming call and if the predetermined time elapses, then control goes to the step ST33, whereat the personal handyphone system may be placed in the standby mode. On the other hand, if the caller side answers to the incoming call before the predetermined time elapses, then control goes to a step ST129, whereat the character series data obtained at the above-mentioned step ST125 and the historical information stored in the nonvolatile memory 117 may be transmitted to the caller side via the DTMF signal. Then, control goes to the step ST32, whereat the telephone line may be disconnected. At the step ST33, the personal handyphone system may be placed in the standby mode. Thus, the caller side (monitor side) can receive the historical information together with the character series data serving as the present position information via the DTMF signal.

Moreover, if it is determined at the step ST41 that the position information request is issued, then control goes to a step ST130, whereat the telephone line may be disconnected, and control goes to the step ST123. Then, similarly as described above, the control section may execute the search operation to obtain the character series as the position information, may make an outgoing call to the caller side (monitor side), and may transmit the character series data and the historical information stored in the nonvolatile memory 117 to the caller side (monitor side) via the DTMF signal (see steps ST123 to ST129). In this manner, in the telephone conversation mode, the caller side (monitor side) can receive the historical information together with the character series data serving as the present position information based on the DTMF signal by transmitting the position information request based on the DTMF signal. A rest of operations is similar to that of the operations of the flowcharts of FIGS. 11 and 12.

Other example of the manner in which the control section is operated when the historical information also may be transmitted in response to the position information request will be described with reference to the flowcharts of FIGS. 25 and 26. In the flowcharts of FIGS. 25 and 26, steps corresponding to those of the flowcharts of FIGS. 14 and 15 are marked with the same reference numerals, and therefore need not be described in detail.

If it is determined at the step ST60 that the caller side answers to the incoming call, then control goes to a step ST131, whereat the character series data obtained at the step ST58 and the historical information stored in the nonvolatile memory 117 may be transmitted to the caller side based on the DTMF signal. At the next step ST132, the character series obtained at the step ST58 and the time obtained at that very moment may be paired and then such pair may be stored in the nonvolatile memory 117 as historical information. Then, the telephone line may be disconnected at the step ST64, and the personal handyphone system may be placed in the standby mode.

Moreover, if it is determined at the step ST71 (FIG. 26) that the position information request is issued, then control goes to the step ST73, whereat the telephone line may be disconnected, and control goes to the step ST56. Then, similarly as described above, the control section may obtain the character series as the position information by executing the search operation, may make an outgoing call to the caller side (monitor side), and may transmit the character series data and the historical information stored in the nonvolatile memory 117 to the caller side based on the DTMF signal. Further, that character series and the time obtained at that very moment may be paired, and may be stored in the nonvolatile memory 117 as the historical information (see the steps ST56 to ST132).

As described above, the historical information may be stored in the nonvolatile memory 117 each time the caller side (monitor side) issues the position information request. FIG. 27B shows an example of the manner in which historical information obtained in that case may be stored in the memory. Therefore, when calling someone or in the telephone conversation state, the caller side (monitor side) may receive the historical information together with the character series data serving as the present position information based on the DTMF signal by issuing the position information request. A rest of operations is similar to that of the operations of the flowcharts of FIGS. 14 and 15.

Also, instead of storing the historical information in the personal handyphone system 100 as described above, it is considered that the historical information may be stored in the caller side (monitor side). An example of the manner in which the personal handyphone system on the caller side (monitor side) for storing therein the historical information is operated will be described below with reference to a flowchart of FIG. 28. In this case, we assume the operations of the flowcharts of FIGS. 11 and 12 as the operations of the personal handyphone system 100 on the monitored side.

Initially, it is determined at a step ST151 whether or not there is the event such as an incoming call or an outgoing call. At a step ST152, it is determined whether or not a predetermined time as a time for awaiting the event elapsed. If it is determined that there is the event before the predetermined time elapses, then control goes to a step ST153, whereat the control section may execute an event processing.

If it is determined that there is no event and that the predetermined time elapses, then control goes to a step ST154, whereat the control section makes an outgoing call containing an information notice code at the incoming sub-address to the monitored side. Then, it is determined at a step ST155 whether or not the monitored side answered to the incoming call. Then, it is determined at a step ST156 whether or not a predetermined time elapses as a time for awaiting the answer. If the monitored side does not answer to the incoming call and the predetermined time elapses, control goes to a step ST157, whereat the personal handyphone system may be placed in the standby mode. If on the other hand the monitored side answered to the incoming call before the predetermined time elapses, then control goes to a step ST158, whereat it is determined whether or not the character series data may be received as the position information. Also, it is determined at a step ST159 whether or not the predetermined time serving as the time for awaiting the reception of the character series data elapses.

If the character series data is not received even after the predetermined time elapses, then control goes to a step ST160, whereat the telephone line may be disconnected. Then, the personal handyphone system may be placed in the standby mode at the step ST157. If on the other hand the character series data is received before the predetermined time elapses, then control goes to a step ST161, whereat the character series data and the time obtained at that very moment may be paired and such pair may be stored in the nonvolatile memory as historical information. Then, control goes to the step ST160, whereat the telephone line may be disconnected. Then, the personal handyphone system may be placed in the standby mode at the step ST157.

In this manner, in the personal handyphone system on the caller side (monitor side), the character series data which results from requesting the position information at every predetermined time and the time may be paired and such pair may be stored as the historical information. FIG. 27A shows an example of the manner in which historical information obtained in that case may be stored. Therefore, when the user operates the personal handyphone system, the historical information stored in the nonvolatile memory may be displayed on the display section, whereby the user can visually confirm the history in which the monitored side had moved at every predetermined time.

Other example of the manner in which the personal handyphone system on the caller side (monitor side) for storing therein historical information may be operated will be described next with reference to a flowchart of FIG. 29. Also in this case, let us assume operations of the flowcharts of FIGS. 11 and 12 as the operations of the personal handyphone system 100 on the monitored side.

Initially, it is determined at a step ST141 whether or not there is an event such as an incoming call or an outgoing call. If there is the event, then control goes to a step ST142, whereat it is determined whether or not such event is an outgoing call containing the information notice code in the incoming sub-address. If the outgoing call is not the outgoing call containing the information notice code in the incoming sub-address, then control goes to a step ST143, whereat the personal handyphone system may execute the ordinary operation corresponding to the event.

If it is determined that the outgoing call is the outgoing call in which the incoming sub-address contains the information notice code, then control goes to a step ST144, whereat it is determined whether or not the monitored side answered to the incoming call. It is determined at a step ST145 whether or not a predetermined time serving as a time for awaiting the answer elapses. If it is determined that the monitored side does not answer to the incoming call and that the predetermined time elapsed, then control goes to a step ST146, whereat the personal handyphone system may be placed in the standby mode. On the other hand, if the monitored side answered to the incoming call before the predetermined time elapses, then control goes to a step ST146, whereat it is determined whether or not the character series data is received as information data. Also, it is determined at a step ST147 whether or not a predetermined time elapses as a time for awaiting the reception of the character series data.

If the character series data is not received even after the predetermined time elapsed, then control goes to a step ST148, whereat the telephone line may be disconnected. Thereafter, the personal handyphone system may be placed in the standby mode. On the other hand, if the character series data is received before the predetermined time elapses, then control goes to a step ST149, whereat the display section comprised of a liquid-crystal display device or the like may display the character series based on the character series data. Thus, the user of the personal handyphone system on the monitor side can visually confirm the present position of the monitored side.

Then, at a step ST150, the received character series and the time obtained at that very moment may be paired and such pair may be stored in the nonvolatile memory as historical information. Then, control goes to the step ST148, whereat the telephone line may be disconnected. Then, the personal handyphone system may be placed in the standby mode. FIG. 28B shows an example of the manner in which historical information in that case may be stored in the memory. In this manner, the personal handyphone system on the caller side (monitor side) may pair the character series data which results from requesting the position information with the time and may store such pair as the historical information. Therefore, when the user operates the personal handyphone system, the historical information stored in the nonvolatile memory may be displayed on the display section so that the user can visually confirm the history in which the monitored side had moved.

Incidentally, while position information (character series data) obtained just before the historical information stored in the nonvolatile memory 117 is transmitted to the caller side (monitor side) may also be transmitted when such historical information is transmitted to the caller side as described above, the present invention is not limited thereto, and only the historical information can be transmitted. Although not described above, it is needless to say that the personal handyphone system which handles this historical information can use not only the character series data but also audio data and image data.

Further, while one kind of data of position information is transmitted to the party being called (monitor side) as described above, depending upon the type of the device of the party being called (general telephone set, facsimile, personal computer, etc.), the designation of the notice method may become complicated, and the kind of data of the position information transmitted to the party being called may become more than two kinds.

Furthermore, while the communication terminal device is the personal handyphone system as described above, it is needless to say that this invention can be similarly applied to other communication terminal device such as a portable telephone.

## INDUSTRIAL APPLICABILITY

As described above, the communication terminal device according to this invention is for use with a communication terminal device such as a personal handyphone system and a portable telephone.

## Claims

1. A communication terminal device comprising:

memory means for storing therein a plurality of combinations of a base station identification information group and corresponding position information;
information acquisition means for acquiring a base station identification information group comprising base station identification information concerning a control channel whose receive signal strength indicate fall within the high-order predetermined number from base station identification information which result from sequentially receiving control channels of available public base stations; and
information processing means for obtaining said position information comprising said combination having the maximum number of base station identification information by comparing said base station identification information group acquired at said information acquisition means with base station identification information groups of each of a plurality of combinations stored in said memory means.

2. A communication terminal device according to claim 1, further comprising informing means for informing a position indicated by said position information acquired by said information processing means.

3. A communication terminal device according to claim 1, further comprising position information transmission means for transmitting said position information acquired by said information processing means to the party being called.

4. A communication terminal device as claimed in claim 3, wherein said position information is character series data and said position information transmission means transmits said character series data to said party being called in the form of DTMF signal.

5. A communication terminal device as claimed in claim 3, wherein said position information transmission means automatically answers to an incoming call and transmits said position information to said party being called if a telephone number of said party being called concerning an incoming call is a designated telephone number when a call is coming in.

6. A communication terminal device as claimed in claim 3, wherein said position information transmission means automatically answers to an incoming call and transmits said position information to said party being called if a designated information notice code is transmitted from the party being called when a call is coming in.

7. A communication terminal device as claimed in claim 3, wherein said position information transmission means automatically answers to an incoming all and transmits said position information to said party being called if a telephone number of a party being called concerning said incoming call is a designated telephone number when a call is coming in and if a designated information notice code is transmitted from the party being called when a call is coming in.

8. A communication terminal device as claimed in claim 6 or 7, wherein said information notice code is transmitted under the condition that it is located at an incoming sub-address.

9. A communication terminal device as claimed in claim 3, wherein said position information transmission means transmits said position information to said party being called when a position information request is transmitted thereto from said party being called in the form of a DTMF signal.

10. A communication terminal device according to claim 3, further comprising mode set means for setting a position investigation mode to transmit said position information to said party being called and wherein said position information transmission means transmits said position information to said party being called only when said position investigation mode is set by said mode set means.

11. A communication terminal device as claimed in claim 10, wherein said mode set means can set said position investigation mode only when a combination of base station identification information group and corresponding position information is stored in said memory means.

12. A communication terminal device as claimed in claim 3, wherein said position information transmission means adds data indicative of accuracy of said position information to said position information in response to the number of coincident base station identification information and transmits resultant position information to said party being called.

13. A communication terminal device as claimed in claim 1, wherein said information acquisition means executes an operation to acquire said base station identification information group at every constant time.

14. A communication terminal device according to claim 3, further comprising position information request reception means for receiving a position information request from the party being called and wherein said position information transmission means transmits said position information acquired at said information processing means to said party being called when said position information request is received by said position information request reception means.

**15.** A communication terminal device as claimed in claim 14, wherein said information acquisition means executes an operation to acquire said base station identification information group when said position information request is received by said position information request reception means.

**16.** A communication terminal device as claimed in claim 1, wherein said information acquisition means executes an operation to acquire said base station identification information group when received data is deteriorated.

**17.** A communication terminal device as claimed in claim 3, wherein said information acquisition means executes an operation to acquire said base station identification information group when an incoming call arrives from the party being called having a designated telephone number and said position information transmission means transmits said position information acquired at said information processing means to said party being called having the designated telephone number by calling said party being called.

**18.** A communication terminal device as claimed in claim 1, wherein said information processing means divides base station identification information group of each of a plurality of combinations stored in said memory means and base station identification information group acquired at said information acquisition means into a plurality of groups based on said receive signal strength indicate and compares the base station identification information group acquired at said information acquisition means with base station identification information group of each of a plurality of combinations stored in said memory means at said every group.

**19.** A communication terminal device according to claim 3, further comprising notice method designation reception means for receiving a notice method designation of said position information from said party being called and data kind selection means for selecting a kind of data of said position information transmitted from said position information transmission means to said party being called on the basis of said received notice method designation.

**20.** A communication terminal device as claimed in claim 19, wherein said data kind selection means selects one or a plurality of character series data, audio data and image data as a kind of data of position information transmitted to said party being called.

**21.** A communication terminal device as claimed in claim 19, wherein said notice method designation reception means receives said notice method designation when it receives an incoming call from said party being called.

**22.** A communication terminal device as claimed in claim 21, wherein said notice method designation is transmitted under the condition that it is located at an incoming sub-address.

**23.** A communication terminal device as claimed in claim 19, wherein said notice method designation reception means receives said notice method designation after it answers to an incoming call from said party being called.

**24.** A communication terminal device as claimed in claim 23, wherein said notice method designation is transmitted in the form of a DTMF signal.

**25.** A communication terminal device according to claim 1, further comprising historical information hold means for pairing said position information acquired at said information processing means with time information obtained at that very moment and holding said pair as historical information.

**26.** A communication terminal device according to claim 25, further comprising position information reception means for receiving a position information request from the party being called and position information transmission means for transmitting at least said historical information of said position information acquired at said information processing means and said historical information held at said historical information hold means when said position information request is received.

**27.** A communication terminal device as claimed in claim 25, wherein said information acquisition means automatically executes an operation to acquire said base station identification information group at every predetermined time.

**28.** A communication terminal device as claimed in claim 26, wherein said information acquisition means executes an operation to acquire said base station identification information group when said position information request is received.

**29.** A communication terminal device comprising:

position information request transmission means for transmitting a position information request to the party being called;

position information reception means for receiving said position information transmitted from said party being called; and

inform means for informing the position based on said received position information.

**30.** A communication terminal device as claimed in claim 29, wherein said position information reception means receives not only said position information but also historical information indicative of a history in which said party being called had moved and said inform means informs not only said position but also a history in which said party being called had moved based on said received historical information.

**31.** A communication terminal device comprising:

position information request transmission means for transmitting a position information request to the party being called;

position information reception means for receiving said position information transmitted from said party being called;

historical information hold means for pairing said received position information and a time obtained at that very moment and holding said pair as historical information; and

inform means for informing a history in which said party being called had moved based on said historical information held in said historical information hold means.

**32.** A communication terminal device as claimed in claim 31, wherein said position information request means automatically transmits said position information request at every predetermined time.

**33.** A communication terminal device according to claim 31, further comprising operation means for operating the transmission of said position information request in said position information request transmission means.

**34.** A communication terminal device as claimed in claim 1, wherein said memory means is detachably attached to said device body.

**35.** A communication terminal device according to claim 1, further comprising information write means for receiving a combination of said base station identification information group and corresponding position information and storing said received combination in said memory means.

**36.** A communication terminal device according to claim 1, further comprising mode set means for setting a position input operation mode in which a combination of said base station identification information group and corresponding positions is stored in said memory means and position information input means for inputting said position information and wherein a pair of said base station information identification information group and said position information inputted by said position information input means are stored in said memory means in said position input operation mode.

**37.** A communication terminal device according to claim 36, further comprising display control means for displaying a message of a coincidence if said base station identification information group acquired at said information acquisition means agrees with base station identification information group of a predetermined combination stored in said memory means.

# F I G . 1

# FIG. 2

5×n ms (DOWNLINK INTERMITTENT TRANSMISSION PERIOD)

5ms (TDMA FRAME)

DOWNLINK (TRANSMISSION)    UPNLINK (RECEPTION)

SLOTS USED BY CS

UPLINK LOGICAL CONTROL CHANNEL (LCCH)

DOWNLINK LOGICAL CONTROL CHANNEL (LCCH)

5×n×m ms

LCCH SUPER-FRAME

| BCCH | PCH | SCCH |
|------|-----|------|

| PCH1 | PCH2 | PCH3 | · · · | PCHn |
|------|------|------|-------|------|

EP 1 045 532 A1

# F I G . 3

218

BCCH

| 62 | 32 | 4 | 42 | 62 | 16 |
|---|---|---|---|---|---|
| PR | UW | CI | | DATA (BCCH) | CRC |

CALL IDENTIFICATION CODE

| 9 | n_P | 33-n_P |
|---|---|---|
| | | |

OPERATOR IDENTIFICATION CODE

PAGING AREA NUMBER

ADDITIONAL ID

| 8 | 8 | 8 | | 8 | 6 |
|---|---|---|---|---|---|
| OCTET 1 | OCTET 2 | OCTET 3 | | OCTET 7 | OCTET 8 |

| OCTET \ BIT | 8 | 7 | 6 | 5 | 4 | 3 | 2 | 1 |
|---|---|---|---|---|---|---|---|---|
| 1 | | | | MESSAGE CLASS | | | | |
| 2 | | | | | | | | |
| 3 | | | | | | | | |
| 4 | | | | | | | | |
| 5 | | | | | | | | |
| 6 | | | | | | | | |
| 7 | | | | | | | | |
| 8 | | | | | | | | |

EP 1 045 532 A1

# F I G . 4

CALL IDENTIFICATION CODE

INCOMING CALL IDENTIFICATION CODE (PS CALL CODE)

| | 62 | 32 | 4 | 42 | 28 | 34 | 16 |
|---|---|---|---|---|---|---|---|
| (CS→PS) | PR | UW | CI | | | DATA (SCCH) | CRC |

| | 9 | n P | 33-n |
|---|---|---|---|
| | | | |

OPERATOR IDENTIFICATION CODE

PAGING AREA NUMBER

ADDITIONAL ID

| | 8 | 8 | 8 | 8 | 2 |
|---|---|---|---|---|---|
| | OCTET 1 | OCTET 2 | OCTET 3 | OCTET 4 | OCTET 5 |

| OCTET \ BIT | 8 | 7 | 6 | 5 | 4 | 3 | 2 | 1 |
|---|---|---|---|---|---|---|---|---|
| 1 | | MESSAGE CLASS | | | | | | |
| 2 | | | | | | | | |
| 3 | | | | | | | | |
| 4 | | | | | | | | |
| 5 | | | | | | | | |

EP 1 045 532 A1

# FIG. 5

| | BIT | | | | | | | |
|---|---|---|---|---|---|---|---|---|
| OCTET | 8 | 7 | 6 | 5 | 4 | 3 | 2 | 1 |
| 1 | | CALL SERVICE CLASS | | | PS NUMBER (1ST DIGIT) | | | |
| 2 | PS NUMBER (2ND DIGIT) | | | | PS NUMBER (3RD DIGIT) | | | |
| 3 | PS NUMBER (4TH DIGIT) | | | | PS NUMBER (5TH DIGIT) | | | |
| 4 | PS NUMBER (6TH DIGIT) | | | | PS NUMBER (7TH DIGIT) | | | |
| 5 | PS NUMBER (8TH DIGIT) | | | | PS NUMBER (9TH DIGIT) | | | |
| 6 | PS NUMBER (10TH DIGIT) | | | | PS NUMBER (11TH DIGIT) | | | |
| 7 | PS NUMBER (12TH DIGIT) | | | | PS NUMBER (13TH DIGIT) | | | |
| 8 | | | | INFORM RECEPTION INSTRUCTION | | | | |

EP 1 045 532 A1

F I G. 6

PCH1
BCCH
SCCH
PCHn

PCHa ← RECEIVE PCHa

PCH1
BCCH
SCCH
PCHn

PCHa ← RECEIVE PCHa

PCH1
BCCH
SCCH
PCHn

PCHa ← RECEIVE PCHa

PCH1
BCCH ← RECEIVE BCCH

LCCH SUPER-FRAME

RECEIVE BCCH   CALCULATE RECEPTION TIMING

# F I G . 7

SLOTS USED BY CS

DOWNLINK (TRANSMISSION)

UPLINK (RECEPTION)

TRANSMIT PS

RECEIVE PS

# F I G . 8

STANDBY MODE ——ST6

F I G. 9

```
POSITION INVESTIGATION

o n : 1   o f f : 3
```
116

F I G. 1 0 A

```
POSITION NOTICE CODE


```
116

F I G. 1 0 B

```
POSITION NOTICE CODE

WHERE ARE YOU NOW ?
```
116

F I G. 1 3

| ⋮ |
| --- |
| TELEPHONE NUMBER OF OUTGOING CALL (CALL NUMBER) |
| CALL SUB-ADDRESS |
| INCOMING CALL-SIDE TELEPHONE NUMBER (INCOMING NUMBER) |
| INCOMING SUB-ADDRESS |
| ⋮ |

# FIG. 11

```
                    ┌─────────────────┐
                    │  STANDBY MODE   │
                    └─────────────────┘
                             │
        ┌────────────────────┼
        │           ┌─────────────────────┐
        │           │  SEARCH OPERATION   │────ST21
        │           └─────────────────────┘
        │                    │
        │    ┌─────────────────────────────────────────┐
        │    │ STORE CS-ID WHOSE RSSI FALLS WITHIN      │
        │    │ HIGH-ORDER PREDETERMINED NUMBER IN       │────ST22
        │    │ RAM AS CS-ID GROUP                       │
        │    └─────────────────────────────────────────┘
        │                    │
        │       ┌────────────┼
        │       │                         ST23
        │       │      NO         ◇◇◇◇◇◇◇◇◇◇◇◇◇◇◇
        │   ST24│◄─────────────  ◇  ANY EVENT ?  ◇
        │       │                 ◇◇◇◇◇◇◇◇◇◇◇◇◇◇◇
        │  ◇◇◇◇◇◇◇◇◇◇◇◇◇◇◇◇◇◇◇◇          │
        │ ◇ PREDETERMINED TIME  ◇         │ YES
     NO └◇     ELAPSED ?        ◇
          ◇◇◇◇◇◇◇◇◇◇◇◇◇◇◇◇◇◇◇◇
                    │ YES                       ST25
                                  ◇◇◇◇◇◇◇◇◇◇◇◇◇◇◇◇◇◇◇◇◇◇
                                 ◇ DESIGNATED CALL NUMBER ◇   NO
                                 ◇    COMING IN ?          ◇──────┐
                                  ◇◇◇◇◇◇◇◇◇◇◇◇◇◇◇◇◇◇◇◇◇◇          │
                                           │ YES    ST27          │
                                  ◇◇◇◇◇◇◇◇◇◇◇◇◇◇◇◇◇◇◇◇◇◇          │
                                 ◇ POSITION INVESTIGATION  ◇   NO │
                                 ◇    TURNED ON ?          ◇─────►│
                                  ◇◇◇◇◇◇◇◇◇◇◇◇◇◇◇◇◇◇◇◇◇◇          │
                                           │ YES         ST26     │
                                                          ┌───────┴──────────┐
                                         ( 1 )            │ ORDINARY OPERATION│
                                                          └──────────────────┘
```

# FIG. 12

# F I G . 1 4

```
              ┌──────────────┐
              │ STANDBY MODE │
              └──────┬───────┘
                     │
          ┌──────────┤          ST51
          │       ◇──┴──◇
    NO    │     ╱ ANY EVENT ? ╲
    └─────┘     ◇──────┬──────◇
                       │ YES    ST52
                ◇──────┴───────◇      NO
              ╱ DESIGNATED CALL NUMBER ╲────────┐
              ╲    COMING IN ?         ╱        │
                ◇──────┬───────◇                │
                       │ YES   ST54             │
                ◇──────┴───────◇     NO         │
              ╱ POSITION INVESTIGATION ╲────────┤    ST53
              ╲  MODE TURNED ON ?       ╱       │   ┌──────────┐
                ◇──────┬───────◇                └───│ ORDINARY │
                       │ YES    ST55                 │OPERATION │
              ◇────────┴────────◇                    └──────────┘
      NO    ╱  INFORMATION NOTICE ╲
   (3)◄─────╲   CODE AGREED       ╱
              ╲        ?         ╱
                ◇───────┬───────◇
                        │ YES
   (5)──────────────────┤
                ┌───────┴────────┐
                │ SEARCH OPERATION│───ST56
                └───────┬─────────┘
     ┌──────────────────┴──────────────────┐
     │ STORE CS-ID WHOSE RSSI FALLS WITHIN  │
     │ HIGH-ORDER PREDETERMINED NUMBER IN   │───ST57
     │     RAM AS CS-ID GROUP               │
     └──────────────────┬──────────────────┘
                ┌────────┴────────┐
                │ CHECK NUMBER OF │───ST58
                │ COINCIDENT CS-ID│
                └────────┬────────┘
                ┌────────┴────────┐
                │ MAKE OUTGOING CALL│───ST59
                └────────┬────────┘
     ST60                │
       ◇─────────────────┴───◇    NO
     ╱  CALLER-SIDE          ╲──────────────────┐     ST61
     ╲   ANSWERED            ╱                   │
       ◇──────┬──────◇                    ◇──────┴──────◇   NO
  ST63        │ YES                     ╱ PREDETERMINED TIME ╲──┐
 ┌────────────┴────────────┐            ╲   ELAPSED ?        ╱  │
 │  TRANSMIT CORRESPONDING │              ◇───────┬────────◇    │
 │CHARACTER SERIES TO CALLER SIDE│               │ YES         │
 └────────────┬────────────┘                      │            │
   (6)────────┤                                    │            │
     ┌────────┴──────────────┐                     │            │
     │ DISCONNECT TELEPHONE LINE│───ST64           │            │
     └────────┬──────────────┘                     │            │
   (4)────────┤◄──────────────────────────────────┘            │
     ┌────────┴──────┐                                          │
     │ STANDBY MODE  │───ST62                                   │
     └───────────────┘                                          │
```

# F I G. 1 5

# FIG. 16

```
        ( POSITION INPUT )
        (   OPERATION    )
               │
               │        ST1
          ╱────────────╲    NO              ST3
         ╱ MEMORY HAS EMPTY ╲──────────┐  ┌────────────────────────┐
         ╲     AREA ?       ╱          └──│ DISPLAY LIST OF CHARACTER│
          ╲────────────╱                  │    SERIES (SCROLL)       │
               │ YES                      └────────────────────────┘
        ST2    │                                   │
          ┌─────────┐                              │
          │ SEARCH  │              ╱──────────────────╲   NO
          │OPERATION│             ╱ OVERWRITE PREMISSION╲──────────┐
          └─────────┘             ╲    AREA SELECTED    ╱       ST5 │
               │                   ╲        ?          ╱    ╱──────────────╲  NO
   ST7         │                    ╲──────────────╱     ╱ PREDETERMINED TIME╲──┐
    ╱──────────────╲   NO              │ YES            ╲    ELAPSED ?      ╱  │
   ╱ CONTROL CHANNEL ╲────────┐        │              ST8╲──────────────╱     │
   ╲   RECEIVED ?    ╱        │        │                      │ YES           │
ST9 ╲──────────────╱         │   ┌──────────────┐             │               │
     │ YES                   └───│DISPLAY FAILURE│             │               │
┌──────────────────────────┐    └──────────────┘             │               │
│ STORE CS-ID WHOSE RSSI FALLS │         │───────────────────┘               │
│WITHIN HIGH-ORDER PREDETERMINED│                                              │
│  NUMBER AS CS-ID GROUP       │                                              │
└──────────────────────────┘                                                  │
               │                                                              │
   ST15        │                                                              │
    ╱──────────────────╲   NO                                                 │
   ╱ POSITION INFORMATION╲──────────┐    ST11                                 │
   ╲(CHARACTER SERIES AND ╱         │  ╱──────────────╲   NO                  │
   ╲ AUDIO) INPUTTED ?  ╱          └──│PREDETERMINED TIME╲──────────────────┘
    ╲──────────────╱                  ╲   ELAPSED ?    ╱
ST16    │ YES                          ╲──────────────╱
┌──────────────────┐                         │ YES        ST12
│ STORE PAIR OF POSITION│            ┌──────────────────┐
│ INFORMATION AND CS-ID │            │ MAKE STORED CS-ID │
│  GROUP IN MEMORY      │            │  GROUP INVALID    │
└──────────────────┘                └──────────────────┘
         │                    ST14            │
┌──────────────────┐                          │
│ DISPLAY SUCCESSFUL│                          │
│  POSITION INPUT   │                          │
└──────────────────┘                          │
         │─────────────────────────────────────┘
         │
   ┌──────────────┐
   │ STANDBY MODE │────ST6
   └──────────────┘
```

# FIG. 17

# FIG. 18

# F I G. 1 9

# F I G. 2 0

③

ST66 — OUTPUT RING TONE

ST67

ANSWERED ? — NO

YES

ST68

PREDETERMINED TIME ELAPSED OR TELEPHONE LINE DISCONNECTED BY THE PARTY BEING CALLED ? — NO

YES

ST69

STOP OUTPUT OF RING TONE

④

ST70 — TELEPHONE COMMUNICATION STATE

ST71

POSITION INFORMATION REQUEST ISSUED ? — YES

NO

ST72

ANY OTHER EVENT ? — NO

YES

ST105

ANY DESIGNATION OF NOTICE METHOD ? — NO

ST106

PREDETERMINED TIME ELAPSED ? — NO

YES

YES

ST74

DISCONNECTED ? — NO

ST75

EVENT PROCESSING

YES

⑥

DISCONNECT TELEPHONE LINE — ST73

⑤

# FIG. 21

STANDBY MODE

ST51

NO ← ANY EVENT ?

YES ST52

DESIGNATED CALL NUMBER COMING IN ? — NO

YES ST54

POSITION INVESTIGATION MODE TURNED ON ? — NO ST53

YES ST55

③ ← NO — INFORMATION NOTICE CODE AGREED ?

ORDINARY OPERATION

YES ST107

⑦ → AUTOMATICALLY ANSWER

ST108

ST109 — NO — ANY DESIGNATION OF NOTICE METHOD ?

NO — PREDETERMINED TIME ELAPSED ?

YES

YES

ST110 — DISCONNECT TELEPHONE LINE

ST101 — STORE DESIGNATION CONTENTS OF NOTICE METHOD

ST56 — SEARCH OPERATION

ST57 — STORE CS-ID WHOSE RSSI FALLS WITHIN HIGH-ORDER PREDETERMINED NUMBER IN RAM AS CS-ID GROUP

ST58 — CHECK NUMBER OF COINCIDENT CS-ID

ST59 — MAKE OUTGOING CALL

ST60 — CALLER SIDE ANSWERED ? — NO — ST61

YES

PREDETERMINED TIME ELAPSED ? — NO

YES

ST102 — DESIGNATION IS AUDIO DATA OR OTHERS ? — OTHERS

AUDIO DATA

ST103 — TRANSMIT CORRESPONDING AUDIO DATA TO CALLER SIDE

ST104 — TRANSMIT CORRESPONDING CHARACTER SERIES TO CALLER SIDE

⑥ → DISCONNECT TELEPHONE LINE — ST64

④ →

STANDBY MODE — ST62

# F I G . 2 2

# F I G. 2 3

STANDBY MODE

SEARCH OPERATION ── ST21

STORE CS-ID WHOSE RSSI FALLS WITHIN HIGH-ORDER PREDETERMINED NUMBER IN RAM AS CS-ID GROUP ── ST22

CHECK NUMBER OF COINCIDENT CS-ID ── ST121

STORE CORRESPONDING CHARACTER SERIES AND TIME IN MEMORY AS HISTORICAL INFORMATION ── ST122

ST23 ANY EVENT ?
NO
YES

ST24 PREDETERMINED TIME ELAPSED ?
NO
YES

ST25 DESIGNATED CALL NUMBER COMING IN ?
NO
YES

ST27 POSITION INVESTIGATION MODE TURNED ON ?
NO
YES

ST26 ORDINARY OPERATION

1

# FIG. 24

① 

ST28 — INFORMATION NOTICE CODE AGREED ?

ST34 — NO → OUTPUT RING TONE

YES → ST123 — SEARCH OPERATION

ST124 — STORE CS-ID WHOSE RSSI FALLS WITHIN HIGH-ORDER PREDETERMINED NUMBER IN RAM AS CS-ID GROUP

ST35 — ANSWERED ?

YES

NO

ST125 — CHECK NUMBER OF COINCIDENT CS-ID

ST36 — PREDETERMINED TIME ELAPSED OR TELEPHONE LINE DISCONNECTED BY THE PARTY BEING CALLED ? — NO

ST126 — MAKE OUTGOING CALL

YES

ST37 — STOP OUTPUT OF RING TONE

ST129 — TRANSMIT CORRESPONDING CHARACTER SERIES AND HISTORICAL INFORMATION TO CALLER SIDE

ST127 — CALLER-SIDE ANSWERED ? — YES

NO

ST128 — PREDETERMINED TIME ELAPSED ? — NO

ST32 — DISCONNECT TELEPHONE LINE

YES

ST33 — STANDBY MODE

ST40 — TELEPHONE COMMUNICATION STATE

ST41 — POSITION INFORMATION REQUEST ISSUED ? — YES → ST130 — DISCONNECT TELEPHONE LINE

ST42 — NO

ANY OTHER EVENT ? — NO

YES — ST45

ST45 — DISCONNECTED ? — NO

YES

ST46 — EVENT PROCESSING

# FIG. 25

```
                    ┌──────────────┐
                    │ STANDBY MODE │
                    └──────┬───────┘
                           │        ST51
         ┌─────────────────┤
     NO  │         ╱◇╲
    ◄─────┘◄──── ◇ ANY EVENT ? ◇
                    ╲◇╱
                     │ YES  ST52
              ╱◇──────────────◇╲        NO
             ◇ DESIGNATED CALL NUMBER ◇──────────┐
              ╲   COMING IN ? ◇╱                  │
                     │ YES  ST54                  │
              ╱◇──────────────◇╲        NO        │   ST53
             ◇ POSITION INVESTIGATION ◇──────────►│
              ╲  TURNED ON ? ◇╱                   │
                     │ YES  ST55            ┌──────┴──────┐
      ┌──┐   NO   ╱◇──────────◇╲            │  ORDINARY   │
      │3 │◄──────◇ INFORMATION NOTICE ◇     │  OPERATION  │
      └──┘        ╲ CODE AGREED ◇╱          └─────────────┘
                     │   ?
      ┌──┐           │ YES
      │5 │───────────►
      └──┘        ┌──────────────────┐
                  │ SEARCH OPERATION │───ST56
                  └────────┬─────────┘
         ┌───────────────────────────────────┐
         │ STORE CS-ID WHOSE RSSI FALLS WITHIN│───ST57
         │ HIGH-ORDER PREDETERMINED NUMBER IN │
         │      RAM AS CS-ID GROUP            │
         └───────────────┬───────────────────┘
                  ┌──────────────┐
                  │ CHECK NUMBER OF │───ST58
                  │ COINCIDENT CS-ID│
                  └───────┬─────────┘
                  ┌──────────────────┐
                  │ MAKE OUTGOING CALL │───ST59
                  └────────┬───────────┘
          ST60              │
```

|  |  |  |  |
|---|---|---|---|

STANDBY MODE

ST51

NO ◄ ANY EVENT ?

YES ST52

DESIGNATED CALL NUMBER COMING IN ? — NO

YES ST54

POSITION INVESTIGATION TURNED ON ? — NO → ST53 ORDINARY OPERATION

YES ST55

3 ◄ NO — INFORMATION NOTICE CODE AGREED ?

5 ◄ — YES

SEARCH OPERATION — ST56

STORE CS-ID WHOSE RSSI FALLS WITHIN HIGH-ORDER PREDETERMINED NUMBER IN RAM AS CS-ID GROUP — ST57

CHECK NUMBER OF COINCIDENT CS-ID — ST58

MAKE OUTGOING CALL — ST59

ST60

ST131 — YES — CALLER SIDE ANSWERED ? — NO — ST61

TRANSMIT CORRESPONDING CHARACTER SERIES AND HISTORICAL INFORMATION TO CALLER SIDE

PREDETERMINED TIME ELAPSED ? — NO

STORE CORRESPONDING CHARACTER SERIES AND TIME IN MEMORY AS HISTORICAL INFORMATION — ST132

YES

6 ►

DISCONNECT TELEPHONE LINE — ST64

4 ►

STANDBY MODE — ST62

# FIG. 26

③

ST66 — OUTPUT RING TONE

ST67

ANSWERED ? — NO

YES

ST68 — PREDETERMINED TIME ELAPSED OR TELEPHONE LINE DISCONNECTED BY THE PARTY BEING CALLED ? — NO

YES

ST69 — STOP OUTPUT OF RING TONE

④

ST70 — TELEPHONE COMMUNICATION STATE

ST71 — POSITION INFORMATION REQUEST ISSUED ? — YES

NO

ST73 — DISCONNECT TELEPHONE LINE

⑤

ST72 — ANY OTHER EVENT ? — NO

YES

ST74 — DISCONNECTED ? — NO

ST75 — EVENT PROCESSING

YES

⑥

F I G. 2 7 A

| | CHARACTER SERIES | TIME |
|---|---|---|
| HISTORICAL INFORMATION 1 | ○○PARK | 12:00 |
| HISTORICAL INFORMATION 2 | △△STATION | 12:15 |
| HISTORICAL INFORMATION 3 | ××TOWN | 12:30 |
| ⋮ | ⋮ | ⋮ |

F I G. 2 7 B

| | CHARACTER SERIES | TIME |
|---|---|---|
| HISTORICAL INFORMATION 1 | AB SCHOOL | 12:00 |
| HISTORICAL INFORMATION 2 | CD DEPARTMENT STORE | 12:35 |
| HISTORICAL INFORMATION 3 | EF BRIDGE | 13:11 |
| ⋮ | ⋮ | ⋮ |

# FIG. 28

STANDBY MODE

ST151

ANY EVENT ? — NO

ST152
PREDETERMINED TIME ELAPSED ? — NO

YES ST153
EVENT PROCESSING

ST154
OUTGOING CALL
(CONTAINING INFORMATION NOTICE CODE)

ST155
MONITORED-SIDE ANSWERED ? — NO

ST156
PREDETERMINED TIME ELAPSED ? — NO

YES

ST158
CHARACTER SERIES RECEIVED ? — NO

ST159
PREDETERMINED TIME ELAPSED ? — NO

YES

ST161
STORE CHARACTER AND TIME IN MEMORY AS HISTORICAL INFORMATION

ST160
DISCONNECT TELEPHONE LINE

STANDBY MODE — ST157

# FIG. 29

STANDBY MODE

ANY EVENT ?  ——NO→ (loop back)  ST141
↓ YES

ST142
OUTGOING CALL (CONTAINING INFORMATION NOTICE CODE) ?  ——NO→ ORDINARY OPERATION  ST143
↓ YES

ST144
MONITORED-SIDE ANSWERED ?  ——NO→ ST145 PREDETERMINED TIME ELAPSED ?  ——NO→ (loop)
↓ YES                                              ↓ YES

ST146
CHARACTER SERIES RECEIVED ?  ——NO→ ST147 PREDETERMINED TIME ELAPSED ?  ——NO→ (loop)
↓ YES                                              ↓ YES

DISPLAY CHARACTER SERIES  ST149

STORE CHARACTER SERIES AND TIME IN MEMORY AS HISTORICAL INFORMATION  ST150

DISCONNECT TELEPHONE LINE  ST148

STANDBY MODE  ST146

# INTERNATIONAL SEARCH REPORT

| | International application No. |
|---|---|
| | PCT/JP98/05714 |

| A. CLASSIFICATION OF SUBJECT MATTER |
|---|
| Int.Cl⁶ H04B7/26, H04Q7/34, G01C21/00 |

According to International Patent Classification (IPC) or to both national classification and IPC

| B. FIELDS SEARCHED |
|---|
| Minimum documentation searched (classification system followed by classification symbols) |
| Int.Cl⁶ H04B7/24-7/26, 102, H04Q7/00-7/38, G01C21/00 |

| Documentation searched other than minimum documentation to the extent that such documents are included in the fields searched |
|---|
| Jitsuyo Shinan Koho 1926-1999 Toroku Jitsuyo Shinan Koho 1994-1999 |
| Kokai Jitsuyo Shinan Koho 1971-1999 Jitsuyo Shinan Toroku Koho 1996-1999 |

| Electronic data base consulted during the international search (name of data base and, where practicable, search terms used) |
|---|
| |

## C. DOCUMENTS CONSIDERED TO BE RELEVANT

| Category* | Citation of document, with indication, where appropriate, of the relevant passages | Relevant to claim No. |
|---|---|---|
| X | JP, 9-312883, A (Sony Corp.), | 1, 2, 13, 16, |
| | 2 December, 1997 (02. 12. 97), | 18, 34-37 |
| Y | Fig. 6 (Family: none) | 3-12, 14, 15, |
| | | 17, 19-24 |
| PX | JP, 10-42342, A (Sharp Corp.), | 1, 2, 13 |
| | 13 February, 1998 (13. 02. 98), | |
| | Fig. 4 (Family: none) | |
| Y | JP, 5-252099, A (Matsushita Electric Industrial | 3-12, 14, 15, |
| | Co., Ltd.), | 17, 19-24 |
| | 28 September, 1993 (28. 09. 93), | |
| | Par. Nos. [0018] to [0020] (Family: none) | |
| X | JP, 9-261720, A (Miwa Science Laboraatory Inc.), | 29 |
| Y | 3 October, 1997 (03. 10. 97), | 3-12, 14, 15, |
| | Fig. 4 (Family: none) | 17, 19-24 |
| Y | JP, 6-326659, A (Sharp Corp.), | 8, 22 |
| | 25 November, 1994 (25. 11. 94), | |
| | Fig. 4 (Family: none) | |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 March, 1999 (24. 03. 99) | 6 April, 1999 (06. 04. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP98/05714

C (Continuation).  DOCUMENTS CONSIDERED TO BE RELEVANT

| Category* | Citation of document, with indication, where appropriate, of the relevant passages | Relevant to claim No. |
|---|---|---|
| A | JP, 9-116952, A  (Matsushita Electric Industrial Co., Ltd.), 2 May, 1997 (02. 05. 97), Figs. 5 to 8  (Family: none) | 25-28,  30-33 |

Form PCT/ISA/210 (continuation of second sheet) (July 1992)